(19) Europäisches Patentamt
European Patent Office
Office européen des brevets

(11) EP 2 576 193 B1

(12) # FASCICULE DE BREVET EUROPEEN

(45) Date de publication et mention de la délivrance du brevet:
**21.06.2017 Bulletin 2017/25**

(21) Numéro de dépôt: **11728325.9**

(22) Date de dépôt: **30.05.2011**

(51) Int Cl.:
***B29C 73/16*** *(2006.01)* ***C08G 59/42*** *(2006.01)*
***C08L 63/02*** *(2006.01)* ***C08L 63/04*** *(2006.01)*
***B29C 73/02*** *(2006.01)*

(86) Numéro de dépôt international:
**PCT/FR2011/051231**

(87) Numéro de publication internationale:
**WO 2011/151584 (08.12.2011 Gazette 2011/49)**

(54) **RESINES ET COMPOSITES THERMODURS EPOXY ACIDES POUVANT ETRE FACONNES A CHAUD ET RECYCLES**

HEISSVERARBEITBARE UND RECYCLINGFÄHIGE SÄUREHÄRTENDE DUROPLASTISCHE EPOXIDHARZE UND VERBUNDSTOFFE

EPOXY RESINS AND COMPOSITES THERMODUR EPOXY ACID THAT MAY BE FORMED AND RECYCLED BY HEATING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.02.2011 FR 1150888**
**31.05.2010 FR 1054213**

(43) Date de publication de la demande:
**10.04.2013 Bulletin 2013/15**

(73) Titulaires:
- **Arkema France**
**92700 Colombes (FR)**
- **Centre National de la Recherche Scientifique**
**75794 Paris Cedex 16 (FR)**

(72) Inventeurs:
- **LEIBLER, Ludwik**
**F-75006 Paris (FR)**
- **MONTARNAL, Damien**
**F-75013 Paris (FR)**
- **TOURNILHAC, François-Genes**
**F-75012 Paris (FR)**
- **CAPELOT, Mathieu**
**F-75013 Paris (FR)**

(56) Documents cités:
**EP-A1- 1 493 766**
**EP-A2- 1 176 175**
**GB-A- 1 215 069**
**GB-A- 1 326 773**
**US-A- 4 131 715**
**US-A1- 2008 299 323**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 576 193 B1

Printed by Jouve, 75001 PARIS (FR)

## Description

### Domaine de l'invention

L'invention concerne de nouveaux systèmes réticulables ayant des propriétés d'élastomères thermoplastiques, ces systèmes étant à base de résine époxy. Plus particulièrement, elle concerne des résines et des composites thermodurs les comprenant, ces matériaux pouvant être façonnés à chaud. Elle a également pour objet un procédé de fabrication de ces matériaux, un procédé de transformation et un procédé de recyclage de ces matériaux. Elle concerne également de nouvelles formes solides de résines et de composites thermodurcis qui peuvent être utilisées dans la mise en oeuvre de ces procédés. Les domaines d'applications sont ceux des matériaux et composites souples, les élastomères, les revêtements, les adhésifs et les colles. La présente invention a notamment pour objet un procédé d'assemblage ou de réparation d'objets à base de résine époxy ainsi qu'une composition à base de résine époxy réparable, permettant la mise en oeuvre du procédé.

Dans le domaine des composites souples, on peut schématiquement distinguer trois classes de matériaux en fonction du type de résine utilisée comme matrice: les composites à matrice thermoplastique souple, les composites à matrice thermodurcissable souple et enfin les composites à matrice élastomère thermoplastique.

Les résines thermoplastiques souples sont des polymères non réticulés tels que le polyéthylène ou le PVC et dont la souplesse est obtenue par addition de plastifiants. Ces résines peuvent être mises et éventuellement remises en oeuvre à haute température. Cependant, elles présentent l'inconvénient d'une viscosité élevée à l'état fondu qui rend difficile l'imprégnation des fibres ou charges de renfort, d'autre part, du fait de la présence de plastifiants, l'innocuité et la stabilité à long terme de ces matériaux n'est pas non plus satisfaisante.

Les résines thermodurcissables souples sont des polymères réticulés. Ce sont par exemple des formulations de résines époxy dans lesquelles le précurseur époxy et/ou le durcisseur sont choisis de façon à obtenir des matériaux mous. Ces résines sont mises en oeuvre avant réticulation à partir des précurseurs qui sont des liquides de faible viscosité.

Ces compositions ont l'avantage de présenter une fluidité élevée avant réticulation ce qui facilite l'imprégnation des charges ou des fibres pour la fabrication de composites. Elles ont en outre une très bonne tenue thermique et mécanique ainsi qu'une bonne résistance aux solvants.

En revanche elles présentent l'inconvénient de ne pas permettre de remise en forme du matériau composite obtenu ou de recyclage de la résine après réaction.

Les élastomères thermoplastiques, comme par exemple, les copolymères à blocs reposant sur la séparation de microphase (de type SBS/SEBS/SIS, polyuréthannes/ PEBA, les ionomères, les élastomères supramoléculaires) présentent quant à eux l'avantage de permettre une remise en forme après obtention du composite. Mais leur faible fluidité constitue un sérieux inconvénient pour leur mise en oeuvre, notamment lorsqu'il faut imprégner un support de ces compositions, en particulier un support de type fibres ou charges.

Les élastomères thermoplastiques ont en outre l'inconvénient de présenter une mauvaise résistance aux hautes températures et aux solvants, en particulier aux huiles. Ils ne permettent pas à l'utilisateur de faire une formulation extemporanée en fonction des besoins aussi facilement que les résines époxy (choix du mélange résine/durcisseur, puis cuisson).

Pour remédier à ces inconvénients, les inventeurs ont mis au point de nouveaux systèmes, à base de résine époxy, donc des systèmes thermodurcissables, qui présentent un comportement de type élastomère thermoplastique. Par définition, un thermodurcissable est un polymère qui durcit sous l'action d'une énergie, en particulier sous l'action de la chaleur. Les matériaux fabriqués à partir de polymères thermodurcissables ont l'avantage de pouvoir être durcis de façon à avoir une résistance mécanique, thermique et chimique élevée et pour cette raison peuvent remplacer les métaux dans certaines applications. Ils ont l'avantage d'être plus légers que les métaux. Ils peuvent aussi être employés comme matrices dans des matériaux composites. Parmi les polymères thermodurcissables, on peut citer les polyesters insaturés, les phénoplastes, les polyépoxydes, les polyuréthannes, les aminoplastes.

Selon l'invention, on entend par résine époxy toute substance monomère, oligomère ou mélange d'oligomères comprenant des groupes fonctionnels oxiranes (aussi appelés fonctions époxy) et par polymère époxy tout produit de la réaction d'une résine époxy avec un ou plusieurs durcisseurs qui, le plus couramment sont des amines, acides carboxyliques, ou anhydrides d'acides. Les polymères époxy servent eux-mêmes à formuler les matériaux époxy qui peuvent se présenter sous la forme de composites, de mousses, d'adhésifs, de peintures et autres revêtements et trouvent des applications dans des domaines très divers (bâtiment, automobile, nautique, aéronautique, électronique, vêtements, équipements sportifs, etc).

Les thermodurcissables, en particulier les époxys, sont moulés et réticulés à chaud ou à température ambiante. La mise en oeuvre s'effectue par voie liquide à partir des monomères. Ils présentent donc l'inconvénient de nécessiter des manipulations et dosages de liquides précis pour leur mise en oeuvre. Le transport des composés précurseurs, sous forme liquide, n'est pas non plus satisfaisant en termes de sécurité.

En outre, les thermodurcissables classiques doivent être fabriqués, en particulier ils doivent être moulés, avec

d'emblée la forme adéquate pour l'utilisation finale. En effet, aucune transformation n'est plus possible une fois qu'ils sont polymérisés, hormis l'usinage qui reste délicat en raison de leur fragilité. Les pièces souples ou dures et les composites à base de résines thermodurcissables ne sont ni transformables, ni façonnables, elles ne peuvent pas être recyclées. Parmi les problèmes rencontrés avec les matériaux à base de résine thermodurcissable, notamment à base de résine époxy, on peut mentionner : les peintures murales ou de carrosseries automobiles ont tendance à se rayer ; les pièces mécaniques ont tendance à se fissurer, s'endommager à force d'être utilisées, ce qui nécessite de les remplacer. Dans le contexte actuel de la protection de l'environnement, de la réduction des déchets et de la réduction de la consommation d'énergie, on cherche de plus à plus à prolonger la durée de vie des pièces et matériaux à base de résine thermodurcissable, notamment de résine époxy. L'un des moyens pour prolonger la durée de vie des pièces et matériaux à base de résine époxy est de pouvoir les réparer. D'autre part, pour la mise en oeuvre de pièces de grande taille ou de pièces complexes, il est intéressant de pouvoir préparer séparément plusieurs éléments et de les assembler ensuite en un objet unique, de la même façon qu'on réassemble les fragments d'un objet cassé.

Parallèlement aux résines thermodurcissables, une classe de matériaux polymères, les thermoplastiques, a été mise au point. Les thermoplastiques peuvent être mis en forme à haute température par moulage ou par injection mais ont des propriétés mécaniques et de résistance thermique et chimique moins intéressantes que celles des thermodurs.

En outre, la mise en forme des thermoplastiques ne peut être réalisée que dans des gammes de température très étroites. En effet, les thermoplastiques lorsqu'ils sont chauffés deviennent des liquides dont la fluidité varie abruptement au voisinage des températures de fusion et de transition vitreuse ce qui ne permet pas de leur appliquer toute une variété de méthodes de transformation qui existent pour le verre et pour les métaux par exemple.

Un des objectifs de l'invention a été la mise au point de résines thermodurcissables qui soient transformables à chaud après durcissement. En particulier, les matériaux de l'invention ont la propriété de pouvoir être chauffés à des températures telles qu'ils deviennent liquides sans subir de destruction ou de dégradation de leur structure. La viscosité de ces matériaux varie lentement sur une large plage de température avec un comportement qui se rapproche de la loi d'Arrhénius. Cette propriété permet de leur faire subir des transformations par des procédés très variés qui ne sont pas envisageables pour les thermoplastiques. Elle permet notamment d'obtenir des formes d'objets qui sont difficiles ou impossibles à obtenir par moulage ou pour lesquels la réalisation d'un moule s'avère trop coûteuse pour la fabrication envisagée. De plus, l'invention rend possible le piégeage et la relaxation contrôlés de contraintes locales.

La présence des fonctions hydroxyle favorise l'adhésion des compositions de l'invention sur des matériaux tels que le bois, le verre, les métaux, et donc permet la fabrication de composites très résistants et leur utilisation en tant que colles et revêtements. L'invention permet de développer de nouvelles applications pour les matériaux thermodurcissables en facilitant leur mise en forme et leur recyclage. Ainsi elle peut ouvrir des domaines d'application et des modes de mise en oeuvre pour les résines thermodurcissables, notamment les résines époxy qui n'étaient absolument pas envisageables jusqu'à présent. L'invention permet enfin de remédier aux problèmes de dosage et de manipulation de liquides qui étaient inhérents à l'emploi de thermodurcissables jusqu'à présent.

Les matériaux de l'invention peuvent être au choix mis en forme comme les résines thermodurcissables classiques en utilisant avantageusement leur fluidité avant la réticulation ou bien comme les thermoplastiques après les réactions de réticulation ou encore par le façonnage à chaud par des méthodes spécifiques.

## Etat de la technique

Il est connu de l'art antérieur (Aflal et al., Appt. Polym. Sci. 2009, 113, 2191) de réparer un objet à base de résine époxy. La solution proposée a consisté à ne faire réagir que partiellement les groupes fonctionnels époxy lors de la fabrication de l'objet. Cela a pu être réalisé en utilisant une quantité sous-stoechiométrique de durcisseur. Pour réparer un objet endommagé on applique alors une température élevée à la partie de l'objet concernée de telle sorte que les fonctions époxy restées libres réagissent entre elles et forment des liaisons covalentes.

Une autre méthode connue de la demande WO02064653 pour réparer un objet à base de polymère consiste à disperser dans le polymère des microcapsules remplies d'un agent polymérisable. L'endommagement de l'objet provoque une rupture des microcapsules et la libération de l'agent polymérisable dans la fracture. La polymérisation de cet agent permet de réparer la fracture. GB1326773 décrit une composition de résine époxy durcit par un acide carboxylique.

Le document US-5,470,609 décrit un procédé de réparation de défauts de surface d'articles en matériau plastique. De tels articles ont été réticulés à chaud et sont réparés à l'aide d'une composition de revêtement comprenant les constituants d'une résine n'ayant pas réagi entre eux. Leur réaction est déclenchée après mise en contact avec la surface à réparer.

Ces méthodes sont toutefois limitées à la réparation d'objets et ne permettent pas d'envisager le recyclage de résines thermodurcissables ni leur transformation, une fois durcies, en un objet ayant une autre forme. En outre, ces méthodes de réparation ne permettent de réparer l'objet qu'une ou deux fois au maximum. En effet, lorsque toutes les

fonctions époxy ont réagi - ou que les agents polymérisables ont polymérisé -, il n'est plus possible de réparer la pièce ou le matériau. Enfin, les matériaux comportant des capsules présentent le plus souvent des propriétés mécaniques inférieures à celles des résines dont ils sont composés.

Des systèmes polymères utilisant des liaisons covalentes réversibles ont déjà été décrits. Ainsi, on connaît par Lehn, J.M., Progress Polym. Sci., 2005, 30, 814-831, et Skene W.G., Lehn, J.M., P.N.A.S. 2004, 22, 8270-8275, des résines polymères capables de se dépolymériser et de se repolymériser sous l'action de la chaleur. L'équipe du Professeur Wudl (Chen X. et al., Science 2002, 295, 1698-1702) a décrit des matériaux autoréparants basés sur la réversibilité de la réaction de Diels-Alder.

Cependant, ces travaux ne concernent que la réparation et l'assemblage de pièces et n'envisagent pas la transformation d'un objet à base de résine thermodurcissable en un objet de forme différente.

Le document J.O.Outwater, D.G. Gerry, J.Adhesion, vol.1, 1969, 290-298 mentionne la possibilité de réparer par chauffage une fracture dans une résine époxy. Il est enseigné dans ce document que la restitution d'énergie associée à la disparition des surfaces de fracture est responsable de ce phénomène. Toutefois, ces observations n'ont pas été renouvelées depuis plus de 40 ans et n'ont conduit à aucun développement. Et la composition de résine qui a été utilisée dans ce document ne répond pas à la définition des compositions de l'invention et ne permet pas de transformer un objet ni d'être soumise à un recyclage.

Selon la présente invention, les résines thermodurcissables sont dotées d'une réversibilité chimique, qui, associée à une contrainte mécanique, peut être utilisée pour donner une nouvelle forme à un objet.

De plus les compositions de résines de l'invention se distinguent aussi de celles de l'art antérieur par le fait qu'il ne s'agit pas de résines spéciales mais qu'elles sont composées d'une résine thermodurcissable, en particulier d'une résine époxy, ordinaire, d'un durcisseur acide capable de réagir avec les fonctions époxydes en générant des fonctions hydroxyle et ester, d'un catalyseur d'estérification classique et d'un catalyseur de transestérification identique ou non. Elles se distinguent des résines époxy classiques par la présence de quantités de catalyseur de transestérification supérieures à celles habituellement employées, la transestérification n'étant habituellement pas recherchée ou envisagée.

Ces compositions et les procédés de l'invention sont donc utilisables dans toutes les applications habituelles des résines thermodurcissables, en particulier des résines époxy souples, mais présentent les propriétés avantageuses qui ont été mentionnées ci-dessus et sont illustrées de façon détaillée dans la description et les exemples de réalisation. Les composés et les procédés de l'invention sont également utilisables dans les applications traditionnelles des élastomères thermoplastiques pour lesquelles ils présentent les propriétés avantageuses des résines époxy notamment la résistance thermique, la résistance chimique, la température de ramollissement élevée ou un faible retrait.

**Résumé de l'invention**

L'invention a pour objet une composition de résine thermodurcissable, cette composition résultant de la réaction d'au moins un précurseur de résine thermodurcissable présentant des fonctions hydroxyle et/ou des groupements époxy, avec au moins un durcisseur qui contient des groupes fonctionnels acide carboxylique, en présence d'au moins un catalyseur de transestérification, la quantité et la fonctionnalité de l'acide étant choisies de telle sorte que la résine soit sous la forme d'un réseau maintenu par des fonctions ester et qu'il reste des fonctions hydroxyle libres après réaction du précurseur avec le durcisseur.

Elle a également pour objet les matériaux composites comprenant une telle composition de résine, un procédé de fabrication d'un objet ou d'un matériau à base de cette résine, un procédé de transformation d'un objet ou d'un matériau à base de résine, un procédé d'assemblage et collage de matériaux et composites à base de cette résine, un procédé de réparation d'objet à base de cette résine, un procédé de recyclage d'un objet à base de résine. L'invention a encore pour objet un procédé de réparation d'une pièce ou d'un matériau à base de résine époxy permettant notamment de réparer autant de fois que nécessaire la pièce ou le matériau à base de résine époxy. Le procédé permet aussi d'assembler des pièces à base de résine époxy.

De façon plus précise, l'invention a pour objet un procédé d'assemblage ou de réparation d'objets à base de résine époxy dont l'un des durcisseurs au moins contient des groupes fonctionnels acides carboxyliques. L'assemblage ou, après endommagement, la réparation de l'objet peuvent être effectués par application d'une température (T) supérieure à la température ambiante, sous réserve d'un bon contact entre les parties à assembler. Ce contact peut être obtenu par exemple par l'application d'une pression mécanique à une température (T) supérieure à la température de transition vitreuse du matériau Tg.

Les inventeurs ont trouvé qu'il était possible d'assembler ou de réparer, autant de fois que nécessaire, une résine époxy réticulée par un durcisseur acide, ayant subi un endommagement, en la soumettant à une température supérieure à la température ambiante, simultanément ou non à une contrainte mécanique. Sans être tenus par cette explication, les inventeurs pensent que lors de l'étape à chaud, les fonctions ester obtenues après la réaction époxy-acide s'échangent. De cette façon, de nouvelles fonctions esters sont créées en particulier à l'emplacement de l'endommagement.

L'invention concerne encore les objets en matériau thermodurcissable susceptibles d'être obtenus par l'un des procédés de l'invention.

L'invention se fonde sur les réactions de trans-estérification pouvant survenir quand un polymère contient à la fois des fonctions ester et des fonctions hydroxyle.

Pour permettre ces transestérifications et obtenir des matériaux ayant un comportement d'élastomère thermoplastique, on fait polymériser des résines époxy en utilisant comme durcisseurs des molécules comportant au moins deux fonctions acide carboxylique.

Pour que la réaction de transestérification soit exploitable dans une gamme de températures qui n'entraîne pas la destruction du matériau et à des échelles de temps contrôlables, l'invention fait appel à un catalyseur.

Par rapport aux résines thermoplastiques, qui sont elles aussi susceptibles d'être transformées à chaud, le matériau selon l'invention peut être travaillé sans s'écouler sous son propre poids dans une gamme de températures beaucoup plus large ce qui permet d'appliquer des méthodes de transformation variées, notamment sans avoir recours de façon impérative à un moulage. Ces méthodes sont de même nature que celles employées dans les domaines des métaux et du verre.

Cette méthode permet aussi par l'application d'une température suffisante et d'une contrainte mécanique appropriée de mouler des objets en matériau thermodurcissable à partir du matériau thermodurci. La méthode permet aussi par l'application d'une température suffisante et avec un bon contact des pièces, l'assemblage de pièces par le soudage de manière à former un objet plus complexe. La méthode permet aussi par l'application d'une température suffisante et d'une contrainte mécanique de réparer une fissure ou un endommagement causé à une pièce constituée du matériau. Et l'on peut envisager de fabriquer des structures sandwich à partir de feuilles de matériau thermodurci de l'invention qui s'intercalent et font office de colle entre des matériaux de type bois, verre, plastique ou métal par exemple.

Un autre avantage de ce procédé est de permettre le recyclage du matériau après utilisation, les pièces pouvant être reconditionnées sous forme d'unités ou pièces élémentaires puis à nouveau remises en forme suivant l'invention.

Enfin, la combinaison, dans les résines et matériaux de l'invention, de durcisseurs acides avec d'autres types de durcisseurs permet d'obtenir des formulations ayant une large gamme de propriétés mécaniques à la température ambiante (contrôle de la Tg, du module).

Contrairement aux colles et adhésifs thermodurs (époxys) classiques il est possible de relaxer les contraintes piégées dans des structures composites ou sandwichs au cours de leur mise en forme ou de leur usage et ainsi améliorer la résistance mécanique et chimique (la résistance aux solvants et stress cracking) et la durée de vie des pièces et des objets.

**Description détaillée de l'invention**

L'invention a pour objet une composition de résine thermodurcissable, cette composition résultant de la mise en contact :

D'au moins un précurseur de résine thermodurcissable, ce précurseur de résine thermodurcissable comportant des fonctions hydroxyle et/ou des groupements époxy, et éventuellement des fonctions ester,
Avec au moins un durcisseur choisi parmi les acides carboxyliques,
En présence d'au moins un catalyseur de transestérification, et dont la quantité totale en mole est entre 5 et 25% de la quantité molaire totale d'hydroxyle et d'époxy contenus dans le précurseur de résine thermodurcissable,
La quantité de durcisseur étant choisie de telle sorte que la résine soit sous forme d'un réseau et :

$N_O$ désignant le nombre de moles de fonctions hydroxyle dans le précurseur,
$N_X$ désignant le nombre de moles de groupements époxy dans le précurseur,
$N_A$ désignant le nombre de moles de fonctions acide carboxylique du durcisseur capables de former une liaison avec une fonction hydroxyle ou avec un groupement époxy du précurseur de polymère thermodurcissable :

$$N_A < N_O + 2N_x$$

Lorsque le durcisseur est un diacide carboxylique, il est susceptible de fournir deux fonctions acides par molécule et $N_A$ est égal au double du nombre de moles de durcisseur. Lorsque le durcisseur est un triacide carboxylique, il est susceptible de fournir trois fonctions acides par molécule et $N_A$ est égal au triple du nombre de moles de durcisseur. La plupart du temps, le durcisseur est un mélange de composés de fonctionnalités diverses et $N_A$ doit être calculé en

fonction de sa composition.

De préférence, on choisit les quantités de réactifs de telle sorte qu'après réticulation il ne reste pas de fonctions époxy n'ayant pas réagi.

Cela se traduit par la relation $N_A > N_X$.

Par précurseur de résine thermodurcissable on entend au sens de la présente invention un oligomère, un prépolymère, un polymère ou toute macromolécule qui, lorsqu'il est mis à réagir avec un durcisseur, aussi appelé réticulant, en présence d'une source d'énergie, notamment de chaleur, et éventuellement d'une petite quantité de catalyseur, donne un réseau de polymère doté d'une structure solide. Les résines thermodurcissables connues de l'art antérieur ne peuvent pas après réticulation être transformées sous l'action de la température, les réactions ayant conduit à la formation d'un réseau tridimensionnel étant irréversibles. Les résines thermodurcissables réticulées par des acides ont un comportement de type élastomère : leur température de transition vitreuse est inférieure à 20°C ; à température ambiante un objet à base de résine thermodurcie est déformable sous l'action d'une contrainte mécanique. Toutefois, dans les résines de l'art antérieur, la cessation de la contrainte entraîne le retour à la forme initiale de l'objet quelle que soit la température.

L'invention concerne plus particulièrement des matériaux obtenus par la réaction de précurseurs de résines thermodurcissables avec un ou plusieurs durcisseurs, ces matériaux comportant a) des fonctions ester ainsi que b) des fonctions hydroxyle.

Ces matériaux comportent des fonctions ester et résultent généralement de la réaction de polymérisation entre un durcisseur comprenant au moins un acide polycarboxylique et un précurseur de résine thermodurcissable comprenant au moins une fonction époxy ou une fonction hydroxyle. On peut prévoir d'autres types de précurseurs et de durcisseurs résultant en une résine dotée de fonctions ester et de groupements hydroxyle libres.

Selon l'invention on choisit des précurseurs qui comportent des groupements époxy et/ou des fonctions hydroxyle libres. Ces groupements époxy et ces fonctions hydroxyle libres sont susceptibles de réagir avec les fonctions réactives du durcisseur pour former un réseau tridimensionnel maintenu par des fonctions ester. On peut prévoir que le précurseur de résine thermodurcissable soit lui-même sous forme d'une chaîne polyéther ou polyester qui comporte des fonctions hydroxyle et/ou des groupements époxy susceptibles de participer à une réaction de réticulation en présence d'un durcisseur. On peut aussi prévoir que le précurseur de résine thermodurcissable soit sous forme de résine acrylique ou méthacrylique comportant des groupes époxy.

De façon préférentielle, l'invention concerne des résines thermodurcissables de type résine époxy. Ainsi, de façon avantageuse, le précurseur de résine thermodurcissable est un précurseur de résine époxy. Avantageusement, le précurseur de résine époxy représente au moins 10% en masse de la masse de composition de précurseur thermodurcissable, avantageusement au moins 20%, de préférence au moins 40% et encore mieux au moins 60%.

Un précurseur de résine thermodurcissable de type résine époxy est défini comme une molécule contenant plus d'un groupe époxyde. Le groupe époxyde également nommé oxirane ou éthoxyline, est représenté par la formule ci-dessous :

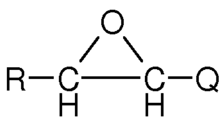

dans laquelle, Q=H ou Q=R', R et R' étant des groupements hydrocarbonés.

Il existe deux grandes catégories de résines époxy : les résines époxy de type glycidyle, et les résines époxy de type non glycidyle. Les résines époxy de type glycidyle sont elles-mêmes classées en glycidyle éther, glycidyle ester et glycidyle amine. Les résines époxy non glycidyle sont de type aliphatique ou cycloaliphatique.

Les résines époxy glycidyle sont préparées par une réaction de condensation du composé dihydroxy approprié avec un diacide ou une diamine et avec de l'épichlorhydrine. Les résine époxy non glycidyle sont formées par peroxydation des doubles liaisons oléfiniques d'un polymère.

Parmi les éthers époxy glycidyle, le diglycidyl éther de bisphénol A (DGEBA) représenté ci-dessous est le plus couramment utilisé.

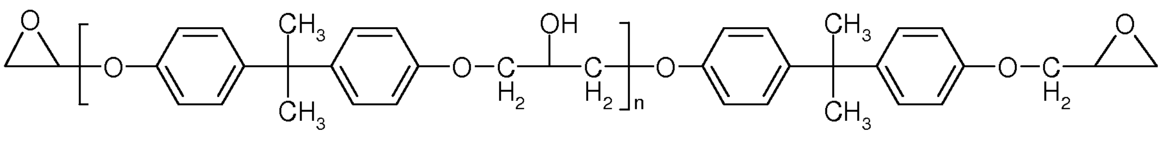

Les résines à base de DGEBA ont d'excellentes propriétés électriques, un faible retrait, une bonne adhérence

sur de nombreux métaux et une bonne résistance à l'humidité, une bonne résistance thermique et aux chocs mécaniques.

Les propriétés des résines DGEBA dépendent de la valeur de n, qui est le degré de polymérisation, qui luimême dépend de la stoechiométrie de la réaction de synthèse. En règle générale, n varie de 0 à 25.

Les résines époxy Novolac (dont la formule est représentée ci-dessous) sont des glycidyléthers de résines phénoliques novolaques. Elles sont obtenues par réaction du phénol avec le formaldéhyde en présence d'un catalyseur acide pour produire une résine phénolique novolaque, suivie d'une réaction avec l'épichlorhydrine en présence d'hydroxyde de sodium comme catalyseur.

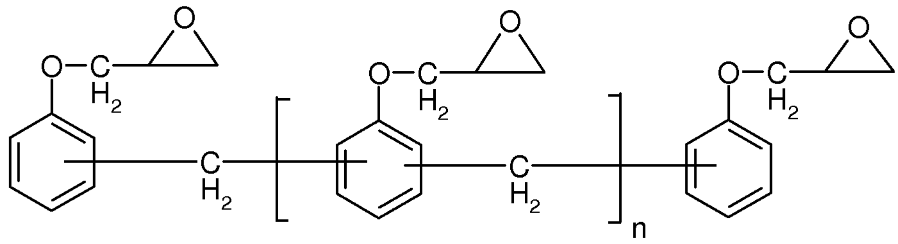

Les résines époxy Novolac contiennent généralement plusieurs groupes époxyde. Les multiples groupes époxyde permettent de réaliser des résines de haute densité de réticulation. Les résines époxy Novolac sont largement utilisées pour formuler des composés moulés pour la microélectronique en raison de leur résistance supérieure à une température élevée, de leur excellente aptitude au moulage, et de leurs propriétés supérieures mécaniques, électriques, de résistance à la chaleur et à l'humidité.

Les résines époxy auxquelles s'applique l'invention peuvent être quelconques à partir du moment où leurs précurseurs comprennent, avant réaction avec l'acide carboxylique, un nombre moyen de fonctions époxyde et hydroxyle par précurseur tel que :

$$2 < 2\langle n_X \rangle + \langle n_O \rangle$$

Cette inégalité est à considérer dans le sens strict.

$\langle n_X \rangle$ étant la moyenne en nombre du nombre de fonctions époxy par précurseur
$\langle n_O \rangle$ étant la moyenne en nombre du nombre de fonctions hydroxyle par précurseur.

La moyenne en nombre étant définie par :

$\langle n \rangle$=Somme(P(i)*i)/Somme(P(i)), où P(i) est le nombre de molécules ayant i fonctions.

De préférence $3 \leq 2\langle n_X \rangle + \langle n_O \rangle$
Et encore plus avantageusement $4 \leq 2\langle n_X \rangle + \langle n_O \rangle$
Le précurseur de résine thermodurcissable utilisable dans la présente invention peut notamment être choisi parmi : Les résines époxy Novolac, le bisphénol A diglycidyl éther (DGEBA), le bisphénol F diglycidyl éther, le tétraglycidyl méthylène dianiline, le pentaérythritol tétraglycidyl éther, le tétrabromo bisphénol A diglycidyl éther, ou les hydroquinone diglycidyl éther, l'éthylène glycol diglycidyl éther, le propylène glycol diglycidyl éther, le butylène glycol diglycidyl éther, le néopentyl glycol diglycidyl éther, le 1,4-butanediol diglycidyl éther, le 1,6-hexanediol diglycidyl éther, le cyclohexanediméthanol diglycidyl éther, le polyéthylène glycol diglycidyl éther, le polypropylène glycol diglycidyl éther, le polytétraméthylène glycol diglycidyl éther, le résorcinol diglycidyl éther, le néopentylglycol diglycidyl éther, le bisphenol A polyéthylène glycol diglycidyl éther, le bisphénol A polypropylèneglycol diglycidyl éther, le diglycidyl ester d'acide téréphtalique, les acides gras polyinsaturés époxydés, les huiles végétales époxydées, les huiles de poissons époxydées, et le limonène époxydé, et leurs mélanges.

Avantageusement, il est choisi parmi : le DGEBA, l'huile de soja époxydée et les résines Novolac.

Selon une variante, l'invention a encore pour objet une composition de résine époxy réparable, contenant une première composition contenant de la résine époxy non réticulée, et une seconde composition contenant un agent de réticulation à base d'acide carboxylique et un catalyseur de réaction, la première et la seconde compositions étant à mélanger juste avant emploi, la quantité d'acide étant suffisante pour que toutes les fonctions époxy soient aptes à réagir avec les fonctions carboxyliques de l'acide.

Selon une variante de l'invention, le (ou les) durcisseur(s) est (sont) utilisé(s) en une quantité suffisante pour

consommer toutes les fonctions époxy libres de la résine. Selon un mode de préparation, un durcisseur de type acide peut notamment être utilisé en quantité stoechiométrique par rapport à la résine époxy de façon que toutes les fonctions époxy aient réagi avec l'acide.

Un durcisseur est nécessaire pour former un réseau tridimensionnel réticulé à partir d'une résine époxy.

Il existe une grande variété de durcisseurs pour résines époxy. Les agents couramment utilisés pour réticuler les époxydes sont les amines, les polyamides, les acides polycarboxyliques, les résines phénoliques, les anhydrides, les isocyanates et les polymercaptans. La cinétique de réaction et la température de transition vitreuse, Tg, de la résine réticulée dépendent de la nature du durcisseur. Le choix de la résine et du durcisseur dépend essentiellement de l'application et des propriétés souhaitées. La stoechiométrie du système époxy-durcisseur affecte également les propriétés du matériau durci.

La résine selon la présente invention est fabriquée avec au moins un durcisseur choisi parmi les acides carboxyliques.

Les durcisseurs de la classe des acides carboxyliques sont typiquement utilisés pour obtenir des matériaux souples (réseaux modérément réticulés à basse Tg).

Les acides carboxyliques réagissent avec les groupements époxydes en formant des esters. La présence d'au moins deux fonctions acide carboxylique sur le composé durcisseur est nécessaire pour réticuler la résine. La présence d'au moins un composé durcisseur comportant au moins trois fonctions acide carboxylique permet de former un réseau tri dimensionnel. L'activation par un catalyseur est nécessaire.

La préparation de la résine selon l'invention peut être réalisée avec un ou plusieurs durcisseurs dont un au moins de type acide carboxylique poly-fonctionnel. Avantageusement, le durcisseur est choisi parmi : les acides carboxyliques sous forme de mélange de dimères et trimères d'acide gras comprenant 2 à 40 atomes de carbone.

Comme acides utilisables dans l'invention, on peut citer les acides carboxyliques comprenant 2 à 40 atomes de carbone, comme les diacides linéaires (glutarique, adipique, pimélique, subérique, azélaïque, sébacique, dodécanedioïque et leurs homologues de masses supérieures) ainsi que leurs mélanges, ou les dérivés d'acides gras. On préfère utiliser les trimères (oligomères de 3 monomères identiques ou différents) et mélanges de dimères et trimères d'acides gras, en particulier d'origine végétale. Ces composés résultent de l'oligomérisation d'acides gras insaturés tels que : l'acide undécylénique, myristoléique, palmitoléique, oléique, linoléique, linolénique, ricinoléique, eicosénoïque, docosénoïque, que l'on trouve habituellement dans les huiles de pin, colza, maïs, tournesol, soja, pépins de raisin, lin, jojoba, ainsi que les acides eicosapentaénoïque et docosahexaénoïque que l'on trouve dans les huiles de poissons.

Comme acides utilisables dans l'invention, on peut encore citer les acides carboxyliques aromatiques comprenant 2 à 40 atomes de carbone, comme les diacides aromatiques tels que l'acide phtalique, l'acide trimellitique, l'acide téréphtalique ou l'acide naphtalènedicarboxylique.

On peut citer comme exemples de trimères d'acides gras, les composés de formules suivantes qui illustrent les trimères cycliques issus d'acides gras à 18 atomes de carbone, sachant que les composés disponibles dans le commerce sont des mélanges d'isomères stériques et d'isomères de position de ces structures, éventuellement partiellement ou totalement hydrogénés.

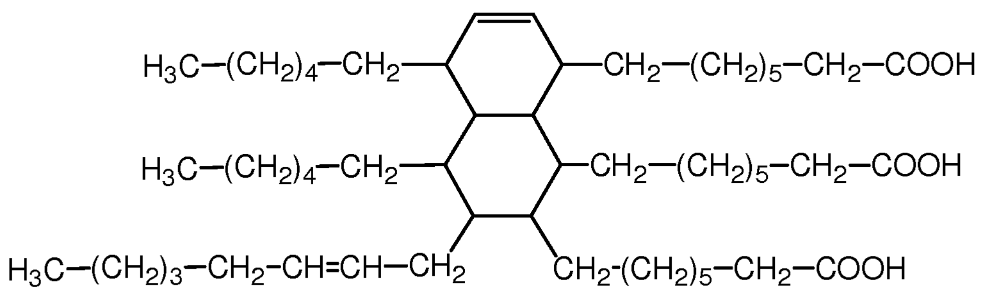

Trimère d'acide en C18

On peut ainsi utiliser un mélange d'oligomères d'acides gras contenant des dimères, trimères et monomères d'acides gras en $C_{18}$ linéaires ou cycliques, ledit mélange étant majoritaire en dimères et trimères et contenant un faible pourcentage (habituellement, moins de 5%) de monomères. De manière préférée, ledit mélange comprend :

- 0,1 à 40% en poids, de préférence 0,1 à 5% en poids de monomères d'acides gras identiques ou différents,
- 0,1 à 99% en poids, de préférence 18 à 85% en poids de dimères d'acides gras identiques ou différents, et
- 0,1 à 90% en poids, de préférence 5 à 85% en poids, de trimères d'acides gras identiques ou différents.

On peut citer, comme exemples de mélanges dimères/trimères d'acides gras (% en poids) :

- le Pripol® 1017 d'Uniqema ou de Croda, mélange de 75-80% de dimères et 18-22% de trimères avec de l'ordre de 1-3 % d'acides gras monomères,
- le Pripol® 1048 d'Uniqema ou de Croda, mélange de 50/50% de dimères/trimères,
- le Pripol® 1013 d'Uniqema ou de Croda, mélange de 95-98% de dimères et de 2-4% de trimères avec 0,2 % maximum d'acides gras monomères,
- le Pripol® 1006 d'Uniqema ou de Croda, mélange de 92-98% de dimères et d'un maximum de 4% de trimères avec 0,4 % maximum d'acides gras monomères,
- le Pripol® 1040 d'Uniqema ou de Croda, mélange de dimères et de trimères d'acide gras avec au moins 75% de trimères et moins de 1% d'acides gras monomères,
- l'Unidyme® 60 d'Arizona Chemicals, mélange de 33% de dimères et de 67% de trimères avec moins de 1% d'acides gras monomères,
- l'Unidyme® 40 d'Arizona Chemicals, mélange de 65% de dimères et de 35% de trimères avec moins de 1% d'acides gras monomères,
- l'Unidyme® 14 d'Arizona Chemicals, mélange de 94% de dimères et de moins de 5% de trimères et autres oligomères supérieurs avec de l'ordre de 1% d'acides gras monomères,
- l'Empol® 1008 de Cognis, mélange de 92% de dimères et de 3% d'oligomères supérieurs, essentiellement des trimères, avec de l'ordre de 5% d'acides gras monomères,
- l'Empol® 1018 de Cognis, mélange de 81 % de dimères et de 14% d'oligomères supérieurs, dont essentiellement des trimères, avec de l'ordre de 5 % d'acides gras monomères,
- le Radiacid® 0980 d'Oleon, mélange de dimères et trimères avec au moins 70% de trimères.

Les produits Pripol®, Unidyme®, Empol®, et Radiacid® comprennent des monomères d'acides gras en $C_{18}$ et des oligomères d'acides gras correspondant à des multiples de $C_{18}$.

On peut également citer comme diacides utilisables dans l'invention les polyoxoalkylènes (polyoxoéthylène, polyoxopropylène, ...) comportant des fonctions acides carboxyliques aux extrémités, l'acide phosphorique, les polyesters et polyamides, ayant une structure branchée ou non, comportant des fonctions acide carboxylique aux extrémités,

De préférence le durcisseur est choisi parmi : les dimères et trimères d'acides gras et les polyoxoalkylènes comportant des acides carboxyliques aux extrémités.

Le ou les durcisseurs de type acide carboxylique peuvent être employés seuls ou en mélange avec d'autres types de durcisseurs notamment des durcisseurs de type amine, des durcisseurs de type anhydride d'acide.

En présence de catalyseurs acides ou basiques, les acides carboxyliques réagissent avec les groupements époxyde en formant des esters. Jusqu'à présent, les catalyseurs utilisés par l'homme de l'art ont été optimisés pour cette réaction d'estérification et sont ajoutés en quantités entre 1 et 3% molaires par rapport aux groupes époxy. [« Epoxy Resins, Chemistry and Technology », seconde Ed., édité par C.A. May, Marcel Dekker, New York1988].

Un durcisseur de type amine peut être choisi parmi les amines primaires ou secondaires ayant au moins une fonction $NH_2$ ou deux fonctions NH et de 2 à 40 atomes de carbone. Cette amine peut par exemple être choisie parmi les amines aliphatiques telles que la diéthylène triamine, la triéthylène tétramine, la tétraéthylène pentamine, la dihexylène triamine, la cadavérine, la putrescine, l'hexanediamine, la spermine, l'isophorone diamine, ainsi que les amines aromatiques telles que la phénylène diamine, la diamino diphénylméthane, la diamino diphénylsulfone, la méthylène bischlorodiéthylaniline.

Avantageusement, lorsqu'un durcisseur amine est employé dans le mélange, le rapport amine/époxy est limité de manière à ce que en absence de liaisons esters, les liaisons amine tertiaire ainsi créées ne suffisent pas pour passer le point de gel. En pratique l'homme de l'art peut se fonder sur la vaste littérature existant sur les systèmes époxy-amine pour choisir la composition adéquate. Le test décrit ci-dessous qui concerne la formation d'un réseau peut être employé pour vérifier le non dépassement du point de gel :

> Dans un matériau, nous considérons que le point de gel n'est pas atteint tant qu'un plot cylindrique fait de ce matériau, avec une hauteur initiale d'approximativement 1 cm à température ambiante et un diamètre de 1 cm, après avoir été laissé 10h à une température de 100°C puis équilibré 30 min à température ambiante, présente une hauteur finale différente de plus de 20% de la hauteur initiale.

Un durcisseur de type anhydride peut être choisi parmi les anhydrides cycliques comme par exemple l'anhydride phtalique, l'anhydride méthylnadique, l'anhydride hexahydrophtalique, l'anhydride dodécylsuccinique, l'anhydride glutarique.

On peut également citer l'anhydride succinique, l'anhydride maléique, l'anhydride chlorendique, l'anhydride nadique, l'anhydride tetrachlorophtalique, le dianhydride pyromellitique, le dianhydride d'acide 1,2,3,4 cyclopentanetétracarboxylique, les polyanhydrides d'acides aliphatiques tels que le polyanhydride polyazélaique, le polyanhydride polysébacique.

Avantageusement, lorsqu'un ou plusieurs durcisseurs autre qu'un acide carboxylique est employé en mélange avec le ou les durcisseurs de type acide carboxylique, l'acide représente au moins 10%, et de préférence au moins 20%, avantageusement au moins 40%, encore mieux au moins 60% en mole par rapport à l'ensemble des durcisseurs.

Suivant l'art antérieur, en utilisant un rapport équimolaire entre les acides carboxyliques et les époxy, on obtient un réseau poly-hydroxyester moyennement réticulé. Avec un rapport 2 :1 entre acides carboxyliques et époxy, on obtient un réseau polyester hautement réticulé qui ne comporte pas les groupes hydroxyle libres nécessaires pour une réaction de transestérification.

Selon l'invention, un compromis doit être choisi entre la présence d'hydroxyles libres permettant de faire des réactions de transestérification et une haute densité de réticulation donnant un matériau solide et résistant mécaniquement.

Selon l'invention on utilise le durcisseur en quantité suffisante pour former un réseau. En particulier, on utilise un durcisseur acide en quantité suffisante pour former un réseau reposant sur des ponts ester.

Dans le sens de cette invention, un réseau est formé à partir du moment où il existe un chemin continu constitué d'une succession de monomères unis les uns aux autres par des ponts ester, ce chemin traversant de bout en bout l'échantillon. Ces monomères peuvent provenir des précurseurs thermodurcissables et/ou des durcisseurs. L'homme de l'art connaît des guides théoriques et/ou empiriques pour déterminer les compositions permettant d'obtenir un réseau à partir des résines et durcisseurs envisagés (cf par exemple P.J. Flory Principles of Polymer Chemistry Cornell University Press Ithaca-NY 1953).

Dans la pratique, on est assuré de la formation d'un réseau si, après formation des ponts esters, un plot cylindrique fait de ce matériau, avec une hauteur initiale d'approximativement 1 cm à température ambiante et un diamètre de 1 cm, après avoir été laissé 10h à une température de 100°C puis équilibré 30 min à température ambiante, présente une hauteur finale différente de moins de 20% de la hauteur initiale.

Selon l'invention on utilise avantageusement dans le durcisseur au moins un diacide ou un acide de fonctionnalité supérieure à deux en quantité suffisante pour former un réseau.

Lorsque l'on utilise un précurseur comportant au moins deux fonctions époxy par molécule, et un durcisseur comportant au moins deux fonctions acide carboxylique, en utilisant un rapport équimolaire d'acides et d'époxy, les conditions déjà énoncées sont suffisantes pour obtenir un réseau:

$$N_A < N_O + 2N_x$$

$$N_A > N_x$$

Un des catalyseurs au moins doit être choisi parmi les catalyseurs de transestérification. Certains catalyseurs de transestérification permettent de catalyser la réaction des époxydes avec le durcisseur. Mais on peut aussi prévoir d'employer un catalyseur spécifique de l'ouverture des époxydes en plus du catalyseur de transestérification.

Les catalyseurs de transestérification sont employés dans l'invention en quantité allant de 5 à 25% molaire par rapport à la quantité molaire totale d'hydroxyle et d'époxy contenus dans le précurseur de résine thermodurcissable. Cette proportion de catalyseur est significativement supérieure aux quantités employées dans l'art antérieur.

Selon l'invention, on entend par catalyseur de transestérification, un composé satisfaisant au test suivant :

<u>Test catalyseur :</u>

*Préparation de l'ester E1 :*

Dans un tube à essai, on place 6,1 mmol d'acide octanoïque (Mw = 144,2 g/mol, m = 0,88 g) et 0,37 mmol (6 %mol) de catalyseur C1, la 2-méthylimidazole (2-MI, Mw = 82,1 g/mol, m~30 mg). A température ambiante, l'acide octanoïque est sous forme liquide alors que la 2-MI est un solide qui sédimente au fond du tube. A 120°C et sous une légère agitation manuelle, le catalyseur est solubilisé rapidement. On ajoute 6,1 mmol de Benzyl Glycidyl Ether (Mw = 164,2 g/mol, m = 1g) et on agite afin d'homogénéiser le mélange réactionnel.

Le mélange est chauffé sous un flux d'azote (~ 40 mL/min) à 120°C.

L'avancement de la réaction est mesuré par spectroscopie IR en suivant l'intensité des bandes $U_{C=0}$ de l'ester à 1735 $cm^{-1}$ et de l'acide à 1705 $cm^{-1}$ ainsi que $\delta_{C-O-C}$ (ring vibration) de l'époxy à 915 $cm^{-1}$.

Au bout d'une heure, on constate par ce moyen que la conversion n'évolue plus. L'analyse par RMN $^{13}C$ (CDCl3/TMS) confirme la disparition du signal [COOH] à 181 ppm et l'apparition du signal [COOR] à 174 ppm.

Le produit obtenu en fin de cette réaction est l'ester E1, produit de l'estérification entre l'acide octanoïque et

le benzyl glycidyl ether, ce qui est confirmé par l'analyse RMN $^{1}H$ et $^{13}C$.

*Préparation de l'ester E2 :*

Le protocole est identique au précédent. Le mélange réactionnel est alors constitué de 6,7 mmol de Phényl Glycidyl Ether (Mw = 150,2 g/mol, m = 1 g), de 6,7 mmol d'acide décanoïque (Mw = 172,3 g/mol, m = 1,15 g) et de 0,4 mmol de 2-MI (6%mol, m ~ 33 mg). L'acide décanoïque et le catalyseur C1 sont sous forme solide : le mélange est donc homogénéisé sous une légère agitation à 120°C. La réaction est effectuée à 120°C sous un flux d'azote de 40 mL/min. L'avancement de la réaction est suivi de la même manière que précédemment : la conversion est terminée au bout d'une heure. Cela est vérifié par la RMN $^{13}C$. Le produit obtenu est l'ester E2.

*Essais de transestérification :*

Dans un tube à essai, on place 0,65 mmol de E1, 0,65 mmol de E2 et 0.032 mmol (5 %mol) de catalyseur C2, qui est le produit à tester. Le mélange est homogénéisé en chauffant à 150°C et en agitant légèrement. Le mélange réactionnel est chauffé à 150°C à l'aide d'un bain d'huile sous un flux d'azote de 40mL/min.

Des prélèvements sont effectués régulièrement afin de suivre la cinétique de transestérification. Chaque prélèvement est analysé par chromatographie en phase gazeuse couplé à la spectrométrie de masse (GCMS) à l'aide d'un appareil Shimadzu GCMS-QP 2010S. L'analyse chromatographique est effectuée par un Shimadzu GC-2010 équipé d'une colonne capillaire Supelco (modèle 28041-U) de longueur 12 m, de diamètre intérieur 0,2 mm garnie d'un film de 0,33 μm de phase stationnaire poly(dimethylsiloxane), non polaire (phase Equity™-1). Le gaz vecteur est l'hélium, avec une pression d'entrée de 34,6 kPa, un débit total de 44,4 mL/min, un débit dans la colonne de 0,68 mL/min, une vitesse linéaire de 48 cm/s et un débit de purge de 3 mL/min.

L'injection de 1 μL de solution dans le méthanol du produit à analyser à une concentration comprise entre 1 mg/g à 5mg/g est effectuée à une température d'injection de 250°C en mode Split, avec un ratio de split de 60%. Le cycle de température de la colonne après l'injection se décompose en un plateau à 80°C pendant 30s suivi d'une rampe de pente 24°C/min jusqu'à 280°C. Cette température est ensuite maintenue constante pendant 7 min pour une durée totale d'analyse de 16 min.

La chromatographie GC est couplée à un spectromètre de masse par impact électronique (SMIE) Shimadzu à 70 eV. La température de la source d'ions ainsi que celle de l'interface sont respectivement 200 et 300°C.

L'aire des signaux présents sur le chromatogramme de la figure 2 correspondant aux monoesters E1, E2, E3 et E4, produits d'échange, est mesurée (ces aires sont notées respectivement A1, A2, A3 et A4). Les monoesters sont identifiés grâce à la fragmentation obtenue par spectrométrie de masse. Les temps de rétention correspondant aux monoesters E1, E2, E3 et E4 sont respectivement 7,9, 8,4, 7,6 et 8,6 min. La cinétique est obtenue en traçant le rapport des aires (A3+A4)/(A1+A2) en fonction du temps de prélèvement et illustrée sur la figure 3.

Un produit est considéré comme un catalyseur au sens de la présente invention si le temps pour lequel le rapport atteint 0,9 est inférieur à 5h.

De préférence, le catalyseur est choisi parmi les sels métalliques de zinc, d'étain, de magnésium, de cobalt, de calcium, de titane, et de zirconium. Il peut également être choisi parmi les catalyseurs de nature organique comme : le benzyldiméthylamide, le chlorure de benzyl triméthylammonium.

Ces catalyseurs sont généralement sous forme solide et dans ce cas, avantageusement sous forme d'une poudre finement divisée.

On peut employer un catalyseur hétérogène, c'est-à-dire un catalyseur qui n'est pas dans la même phase que les réactifs, ou un catalyseur homogène, présent dans la même phase que les réactifs.

Le catalyseur, solide ou liquide, est de préférence soluble dans le précurseur de résine thermodurcissable.

Pour fabriquer la résine thermodurcissable selon l'invention, de façon avantageuse, dans une première étape, on solubilise le catalyseur dans la composition de durcisseur. Lorsque le catalyseur est de nature métallique, il se produit un échange entre les ligands du catalyseur et les groupements acide de façon à former un nouveau catalyseur : le sel constitué du métal du catalyseur et de l'acide carboxylique employé comme durcisseur. Cette solubilisation se fait avantageusement par chauffage et agitation.

On utilise donc, pour produire la résine de l'invention, le sel d'un métal qui peut être choisi parmi le zinc, l'étain, le magnésium, le cobalt, le calcium, le titane, et le zirconium et d'un acide qui peut être choisi dans la liste des durcisseurs acides ci-dessus, comme durcisseur autocatalysé de la réaction de réticulation du précurseur de résine thermodurcissable.

Parmi les catalyseurs d'ouverture d'époxyde qui peuvent être employés en plus du catalyseur de transestérification, on peut citer : le tétrachlorure d'étain, les sels organoborés, les trialkylamines, l'hexaméthylènetétramine, les sels d'étain divalents, les condensats aniline-formaldéhyde, les amines tertiaires, les N,N-alcanolamines, les chélates de métaux comprenant des groupes époxy, les sels d'amine de polyacides, les sels d'uranium, les trialcanolamine

borates, les phosphines organosubstituées, les fluoroborates, les sels d'ammonium quaternaires, les sels de monoimidazoline quaternaires, les dicyanodiamides, les imidazolines.

Lorsque l'on utilise un catalyseur d'ouverture d'époxyde, celui-ci est avantageusement présent en quantités allant de 0,1% à 5% molaire par rapport au nombre de moles de groupements époxydes.

L'invention a encore pour objet un kit pour la préparation d'une résine thermodurcissable ou pour la préparation d'un matériau composite comprenant une résine thermodurcissable telle que décrite ci-dessus comprenant au moins une première composition comprenant un précurseur de résine thermodurcissable, ce précurseur de résine thermodurcissable comportant des fonctions hydroxyle et/ou des groupements époxy, et éventuellement des fonctions ester, au moins une seconde composition comprenant un durcisseur choisi parmi les acides carboxyliques et au moins un catalyseur de transestérification, la première et la seconde composition étant dans un conditionnement adapté pour empêcher la réaction de réticulation entre le précurseur et le durcisseur de se produire sans intervention d'un opérateur. Un tel kit permet de préparer une résine thermodurcissable, la première et la seconde compositions étant mélangées juste avant emploi. On peut prévoir que la composition de durcisseur comprenne le catalyseur, et de préférence le produit de la réaction d'échange entre les ligands du catalyseur et le durcisseur acide.

Un tel conditionnement peut consister en un récipient comportant deux ou trois compartiments internes permettant le stockage séparé de chacun des composants, étant entendu que le catalyseur peut éventuellement être stocké dans le même compartiment que le précurseur ou que le durcisseur. Il peut être prévu un moyen permettant la mise en contact des contenus des différents compartiments de façon à initier la réticulation dans le récipient. On peut aussi prévoir un kit consistant en deux ou trois flacons distincts associés dans un même emballage et comportant chacun les quantités adaptées de chaque produit pour la préparation de la résine thermodurcissable, de façon à éviter à l'utilisateur des opérations de pesée et/ou de dosage.

Selon une variante, le kit pour la préparation d'une résine thermodurcissable peut consister en un seul et unique récipient, comprenant le mélange des trois composants : précurseur, acide carboxylique et catalyseur. En effet, en l'absence de chauffage et à la différence des mélanges époxy-amine, les mélanges précurseur époxy + acide ont une stabilité d'environ deux mois à température ambiante, même en présence de catalyseur. L'intervention de l'opérateur se limite alors à un chauffage.

L'invention a encore pour objet des compositions de matériau composite thermodurcissable comprenant au moins une résine thermodurcissable dont la composition a été décrite ci-dessus. Un tel matériau peut comprendre, outre la ou les résines thermodurcissables selon l'invention : un ou plusieurs polymères, des pigments, des colorants, des charges, des plastifiants, des fibres, des agents retardateurs de flamme, des agents antioxydants, des lubrifiants, du bois, du verre, des métaux.

Parmi les polymères qui peuvent être employés en mélange avec la composition de résine thermodurcissable de l'invention, on peut mentionner : des élastomères, des thermoplastiques, des élastomères thermoplastiques, des additifs chocs.

Par pigments, on entend des particules colorées insolubles dans la résine époxy. Comme pigments utilisables dans l'invention, on peut citer l'oxyde de titane, le noir de carbone, les nanotubes de carbone, les particules métalliques, la silice, les oxydes métalliques, les sulfures métalliques ou tout autre pigment minéral, on peut également citer les phtalocyanines, les anthraquinones, les quinacridones, les dioxazines, les pigments azoïques ou tout autre pigment organique, les pigments naturels (garance, indigo, pourpre, cochenille, etc) et les mélanges de pigments. Les pigments peuvent représenter de 0,05 % à 15% du poids par rapport au poids du matériau.

Par colorants, on entend des molécules solubles dans la résine époxy et ayant la capacité d'absorber une partie du rayonnement visible.

Parmi les charges qui peuvent être employées dans la composition de résine thermodurcissable de l'invention, on peut mentionner : la silice, les argiles, le carbonate de calcium, le noir de carbone, le kaolin, les whiskers.

On peut également prévoir la présence dans les compositions de résine thermodurcissable de l'invention des fibres telles que des fibres de verre, des fibres de carbone, des fibres polyester, des fibres polyamides, des fibres aramides, des fibres cellulosiques et nanocellulosiques ou encore des fibres végétales (lin, chanvre, sisal, bambou...).

On peut également prévoir que les compositions de résine thermodurcissables de l'invention soient utilisées pour fabriquer des matériaux sandwich par superposition en alternance de couches de résine ou de composite à la base de résine avec des couches de bois, de métal, ou de verre.

La présence dans la composition de résine thermodurcissable de pigments, de colorants ou de fibres capables d'absorber le rayonnement peut être utilisée pour assurer le chauffage d'un objet à base d'une telle résine au moyen d'une source de rayonnement telle qu'un laser. La présence dans la composition de résine thermodurcissable de pigments, de fibres ou de charges conductrices de l'électricité tels que noir de carbone, nanotubes de carbone, fibres de carbone, poudres métalliques ou de particules magnétiques peut être utilisée pour assurer le chauffage d'un objet à base d'une telle résine par effet Joule, par induction ou par micro-ondes. Un tel chauffage peut permettre la mise en oeuvre d'un procédé de fabrication, de transformation ou de recyclage d'un objet en résine thermodurcissable suivant un procédé qui est décrit ci-dessous.

L'invention a encore pour objet un procédé de fabrication d'un objet à base d'une composition de résine thermodurcissable telle que décrite ci-dessus, ce procédé comprenant :

a) la mise en contact d'une première composition comprenant au moins un précurseur de résine thermodurcissable, avec une seconde composition comprenant au moins un durcisseur choisi parmi les acides carboxyliques, en présence d'au moins un catalyseur de transestérification,
b) la mise en forme de la composition issue de l'étape a)
c) l'application d'une énergie permettant le durcissement de la résine
d) le refroidissement de la résine durcie.

La mise en contact des composants peut se faire dans un mélangeur de tout type connu de l'homme du métier. L'application d'une énergie permettant le durcissement de la résine à l'étape c) du procédé peut consister de façon connue en un chauffage à une température allant de 50 à 250°C. Le refroidissement de la résine durcie est habituellement opéré en laissant le matériau revenir à la température ambiante, avec ou sans utilisation d'un moyen de refroidissement.
Le procédé est avantageusement mis en oeuvre de façon à atteindre ou dépasser le point de gel de la résine à l'issue de l'étape d). Notamment, le procédé de l'invention comporte avantageusement l'application d'une énergie suffisante à l'étape c) pour que le point de gel de la résine soit atteint ou dépassé.
Par objet, on entend au sens de la présente invention, une pièce thermodurcie à base d'un matériau comprenant une résine thermodurcissable, en particulier une résine époxy, telle que décrite ci-dessus. Il peut s'agir d'un objet en matériau composite. Notamment on peut prévoir d'introduire avant, pendant ou après l'étape a) un ou plusieurs composants additionnels qui peuvent notamment être choisis parmi des polymères, des pigments, des colorants, des charges, des plastifiants, des fibres, des agents retardateurs de flamme, des agents antioxydants, des lubrifiants, du bois, du verre, des métaux. L'objet peut présenter des pores, ouverts ou fermés et remplis de gaz. Avantageusement, dans les objets selon l'invention, la résine a atteint ou dépassé le point de gel.
Les objets selon l'invention peuvent également consister en des revêtements qui sont déposés sur un support, comme une couche de protection ou une peinture par exemple. Ils peuvent également consister en un matériau adhésif.
En pratique le catalyseur est d'abord solubilisé dans la composition comprenant le durcisseur, généralement par chauffage sous agitation, puis les deux compositions sont mélangées.
Par exemple, des réseaux époxy-acides sont obtenus par polymérisation des mélanges de dimères et trimères d'acides et de DGEBA.
La synthèse se produit en trois étapes. Tout d'abord, le catalyseur est solubilisé dans le durcisseur (oligomère d'acide gras par exemple). Cette étape nécessite des températures élevées pour les sels métalliques (de préférence au-dessus de 180 °C). La solubilité est obtenue par les échanges entre les ligands des catalyseurs (acétate, acétylacétonate, octoate, tertbutoxide) et les acides gras. Une évolution d'acide acétique a été démontrée dans le cas de $Zn(ac)_2$, et peut être facilitée lorsque l'on travaille sous vide. Ensuite on introduit la résine époxy DGEBA et on agite en chauffant jusqu'à obtenir un mélange homogène. Le mélange est finalement laissé à durcir dans un moule pendant un temps suffisant pour la relaxation des contraintes.
Un objet résultant de la mise en forme et du durcissement de la composition de résine décrite ci-dessus fait également partie de l'invention.
En particulier l'invention concerne un objet, ou matériau thermodurci, à base de résine thermodurcissable susceptible d'être obtenu par le procédé décrit ci-dessus. Notamment, elle concerne un objet, ou matériau thermodurci, à base de résine thermodurcissable, cette résine ayant atteint ou dépassé le point de gel.
Par application d'une énergie permettant le durcissement de la résine on entend généralement une élévation de température.
De façon habituelle, un objet à base de résine thermodurcissable est fabriqué par mélange des composants : précurseur, durcisseur, catalyseur et additifs, introduction dans un moule et élévation de la température. Les moyens de fabrication d'un tel objet sont bien connus de l'homme du métier.
Mais on peut prévoir grâce aux compositions de résine de l'invention d'autres modes de mise en forme de l'objet que le moulage telles que l'enroulement filamentaire, le moulage en continu ou entre pellicules, l'infusion, la pultrusion, RTM (resin transfer molding), RIM (réaction-injection-moulage) ou toutes autres méthodes connues de l'homme de l'art, telles que décrites dans les ouvrages « Epoxy Polymer », édité par J.P. Pascault et R.J.J. Williams, Wiley-VCH, Weinheim 2010 ou «Chimie industrielle », par R. Perrin et J.P. Scharff, Dunod, Paris 1999.
Avec l'application d'un tel procédé aux compositions de résine thermodurcissable de l'art antérieur, une fois la résine durcie, l'objet n'est plus transformable ni réparable, ni recyclable. En effet, une fois que le point de gel de la résine est atteint ou dépassé, un objet en résine thermodurcissable de l'art antérieur n'est plus ni transformable ni réparable, ni recyclable.L'application d'une température modérée à un tel objet ne conduit à aucune transformation observable ou mesurable, et l'application d'une température très élevée conduit à la dégradation de cet objet.
Au contraire, les matériaux à base de résine thermodurcissable de l'invention, en raison de leur composition

particulière, peuvent être transformés, réparés et recyclés par une élévation de la température de l'objet.

Un cas particulier d'objet de l'invention consiste en un matériau résultant du durcissement d'une résine de l'invention. Les propriétés mécaniques de tels matériaux sont caractérisées ci-dessous et illustrent le caractère innovant de l'invention. Ces propriétés sont conservées même après transformation de ces matériaux par un procédé tel que décrit ci-dessus (application d'une contrainte mécanique et d'une élévation de température).

En dessous de la température de transition vitreuse Tg, le polymère est vitreux et présente le comportement d'un corps solide rigide.

Au dessus de la température Tg il présente un comportement viscoélastique sur une large gamme de température, avec un module de conservation compris entre $1\times10^5$ et $5\times10^6$ Pa suivant la composition. Ce module de conservation peut être déterminé à l'aide d'une mesure dynamique mécanique à 1 Hz connue de l'homme de l'art. Dans une expérience de relaxation de contrainte, où une déformation constante est appliquée à l'échantillon à une température donnée, on constate que la contrainte diminue aux temps longs. Une telle diminution de contrainte n'apparait pas dans le cas des matériaux thermodurs classiques, hormis dans des conditions de dégradation du matériau. La décroissance quasi-exponentielle de la contrainte avec le temps permet de définir le temps de relaxation $\tau_R$ du matériau ainsi que le module au plateau $G_0$ : $G(t)\approx G_0$*$\exp(-t/\tau_R)$. On peut calculer la viscosité du matériau avec la relation : $\eta=\tau_R x G_0$, avec $\eta$ la viscosité en Pa.s, $G_0$ en Pa, et $\tau_R$ en s.

Suivant la composition, la viscosité déterminée en utilisant une déformation de 10% pour la relaxation de contrainte varie entre $10^5$ Pa.s et $5\times10^9$ Pa.s à une température de Tg+150°C pour les matériaux selon l'invention. Le taux de contrainte relaxée : $(G_0-G(t))/G_0$ est supérieur à 20% après 3h de relaxation.

L'invention concerne donc encore un objet, ou matériau résultant du durcissement d'une résine de l'invention, dont la viscosité est comprise entre $10^5$ et $5\times10^9$ Pa.s à des températures comprises entre 150°C et 300°C.

Cette variation lente de viscosité sur une large gamme de températures rend le comportement du matériau comparable à celui des verres inorganiques et permet de leur appliquer des procédés de transformation supplémentaires par rapport à ceux applicables aux thermoplastiques.

Pour une même composition, la viscosité du matériau suit une dépendance du type Arrhénius en fonction de la température, et ce sur un large (typiquement 100°C à 300°C) intervalle de températures : $\eta=B\times\exp(-A/T)$, où A est le paramètre d'activation en $K^{-1}$, T est la température absolue en K, et B une constante en Pa.s. La valeur du paramètre d'activation se trouve typiquement entre 7000 et 12000 $K^{-1}$.

D'un point de vue pratique, cela implique que dans une large gamme de températures, on peut déformer l'objet, puis dans un deuxième temps éliminer les contraintes internes à une température plus élevée.

Sans pour autant être tenus à cette explication, les inventeurs pensent que les échanges de transestérification sont à l'origine de la relaxation de contraintes et de la variation de viscosité à hautes températures. En termes d'application, ces matériaux peuvent être traités à des températures élevées, où une viscosité faible permet l'injection ou le moulage sous presse. Il faut noter que, contrairement aux réactions de Diels-Alder, aucune dépolymérisation n'est constatée à des températures élevées et le matériau conserve sa structure réticulée. Cette propriété permet la réparation de deux parties d'un objet. Aucun moule n'est nécessaire pour maintenir la forme des pièces pendant le processus de réparation à des températures élevées. De la même façon, on peut transformer des pièces par application d'une contrainte mécanique à une partie seulement d'un objet sans avoir besoin d'un moule, car le matériau ne coule pas. Toutefois, les pièces de grande taille, qui ont davantage tendance à s'affaisser, pourront être maintenues par un bâti comme dans le travail du verre.

Un autre objet de l'invention est donc un procédé de transformation d'au moins un objet réalisé à partir d'un matériau tel que décrit ci-dessus, ce procédé comprenant : l'application à l'objet d'une contrainte mécanique à une température (T) supérieure à la température ambiante.

De préférence, pour permettre la transformation dans une durée compatible avec une application industrielle du procédé, le procédé comprend l'application à l'objet d'une contrainte mécanique à une température (T) supérieure à la température de transition vitreuse Tg du matériau composant l'objet.

Habituellement, un tel procédé est suivi d'une étape de refroidissement jusqu'à la température ambiante, éventuellement avec application d'au moins une contrainte mécanique.

Par contrainte mécanique, on entend au sens de la présente invention, l'application d'une force mécanique, localement ou sur tout ou partie de l'objet, cette force mécanique tendant à une mise en forme ou une déformation de l'objet.

Parmi les contraintes mécaniques qui peuvent être employées, on peut mentionner : la pression, le moulage, le malaxage, l'extrusion, le soufflage, l'injection, l'estampage, la torsion, la flexion, la traction et le cisaillement.

Il peut s'agir par exemple d'une torsion appliquée à un ruban de matériau de l'invention. Il peut s'agir d'une pression appliquée à l'aide d'une plaque ou d'un moule sur une ou plusieurs faces d'un objet de l'invention, de l'estampage d'un motif dans une plaque ou une feuille en matériau de l'invention. Il peut encore s'agir d'une pression exercée parallèlement sur deux objets en matériaux de l'invention en contact l'un avec l'autre de façon à provoquer un collage de ces objets. Dans le cas où l'objet consiste en des granulés de matériau de l'invention, la contrainte mécanique peut

consister en un malaxage, par exemple au sein d'un mélangeur ou autour de la vis d'une extrudeuse. Elle peut aussi consister en une injection ou une extrusion. La contrainte mécanique peut également consister en un soufflage, qui peut par exemple être appliqué à une feuille de matériau de l'invention. La contrainte mécanique peut également consister en une multiplicité de contraintes distinctes, de même nature ou non, appliquées de façon simultanée ou successive à tout ou partie de l'objet ou de façon très localisée.

Cette transformation peut inclure un mélange ou une agglomération avec un ou plusieurs composants additionnels choisis parmi : un ou plusieurs polymères, des pigments, des colorants, des charges, des plastifiants, des fibres, des agents retardateurs de flamme, des agents antioxydants, des lubrifiants, du bois, du verre, des métaux.

L'assemblage, le collage et la réparation sont des cas particuliers du procédé de transformation décrit ci-dessus.

Cette élévation de la température de l'objet peut être réalisée par tout moyen connu comme le chauffage par conduction, convection, induction, par point, infra rouge, micro-onde ou radiant. Les moyens permettant de provoquer une élévation de température de l'objet pour la mise en oeuvre des procédés de l'invention comprennent : un four, un four à micro-ondes, une résistance chauffante, une flamme, une réaction chimique exothermique, un faisceau laser, un fer à repasser, un pistolet à air chaud, une cuve à ultrasons, un poinçon chauffant...

L'élévation de température peut être faite par plateaux ou non et sa durée est adaptée au résultat attendu en fonction des indications qui vont être données et des exemples détaillés ci-dessous.

Le procédé de l'invention repose sur les réactions de transestérification qui sont favorisées par la présence du catalyseur et par les fonctions OH libres au sein du réseau de polymère dans les matériaux de l'invention suivant une dynamique illustrée sur la figure 1.

Bien que le matériau ne coule pas durant la transformation, grâce aux réactions de transestérification, en choisissant une température, une durée de chauffage et des conditions de refroidissement appropriées, la nouvelle forme peut être exempte de toute contrainte résiduelle. Le matériau n'est donc pas fragilisé ou fracturé par l'application de la contrainte mécanique. Et la pièce ne reviendra pas à sa forme première. En effet, les réactions de transestérification qui surviennent à haute température favorisent une réorganisation des points de réticulation du réseau polymère de manière à annuler les contraintes mécaniques. Une durée de chauffage suffisante permet d'annuler complètement ces contraintes mécaniques internes au matériau qui ont été causées par l'application de la contrainte mécanique externe.

Cette méthode permet donc d'obtenir des formes complexes stables, difficiles voire impossibles à obtenir par moulage, à partir de formes élémentaires plus simples. Notamment, il est très difficile d'obtenir par moulage des formes résultant d'une torsion.

Selon une variante, l'invention a pour objet un procédé d'obtention et/ou de réparation d'un objet à base de résine époxy comprenant :

- au moins une étape (a) de réaction des fonctions époxy de ladite résine avec au moins un acide carboxylique pour former un objet,
- une étape (b) de mise en contact d'au moins deux objets tels qu'obtenus à l'étape (a), et
- une étape (c) d'application d'une température (T) supérieure à la température ambiante afin d'obtenir un seul objet.

Par objet, on entend notamment au sens de la présente invention, une pièce en matériau époxy; en particulier un matériau composite, une mousse, un film, un empilement de films ou de feuilles.

Par endommagement, on entend au sens de la présente invention, une rayure, une fissure de surface ou en profondeur pouvant conduire à une rupture complète de l'objet selon l'une de ses dimensions ou tout autre défaut induit microscopiquement au cours des sollicitations ou du vieillissement de l'objet.

Selon l'invention, la température (T) au cours de l'étape (b) est choisie dans la gamme allant de 50°C à 250°C, de préférence de 100°C à 200°C.

De préférence, l'acide carboxylique est utilisé au cours de l'étape (a) en quantité stoechiométrique par rapport aux fonctions époxy. Avantageusement, l'acide carboxylique comprend 2 à 40 atomes de carbone. De préférence, l'acide carboxylique est un mélange de dimères et trimères d'acide gras.

De préférence, ce procédé comprend l'ajout d'un catalyseur pendant l'étape (a) et/ou pendant l'étape (b). Avantageusement, le catalyseur est choisi parmi les sels métalliques de zinc, d'étain, de magnésium, de cobalt, de calcium, de titane, et de zirconium qui ont été décrits plus haut.

De préférence, le catalyseur est utilisé à une teneur de 0,1 à 10 % en masse par rapport à la masse totale du matériau et de préférence de 0,5 à 5%.

Selon cette variante, le procédé comprend avantageusement au cours de l'étape (a), l'ajout d'au moins une amine, de préférence, une amine secondaire ou tertiaire ayant 2 à 40 atomes de carbone.

De préférence l'amine est ajoutée au cours de l'étape (a) après l'ajout de l'acide.

Avantageusement, selon cette variante, la quantité d'époxy est telle que toutes les fonctions époxy ont réagi avec les fonctions acide ou amines.

Un objet en matériau de l'invention peut également être recyclé :

Soit par traitement direct de l'objet : par exemple l'objet cassé ou endommagé est réparé par un procédé de transformation tel que décrit ci-dessus et peut ainsi retrouver sa fonction d'usage antérieure ou une autre fonction.

Soit l'objet est réduit en particules par application d'un broyage mécanique, et les particules ainsi obtenues peuvent ensuite être mises en oeuvre dans un procédé de fabrication d'un objet. Notamment, selon ce procédé, des particules de matériau de l'invention sont soumises simultanément à une élévation de température et à une contrainte mécanique permettant leur transformation en objet.

La contrainte mécanique permettant la transformation de particules en objet peut par exemple comporter une compression dans un moule, un malaxage, une extrusion.

Cette méthode permet ainsi par l'application d'une température suffisante et d'une contrainte mécanique appropriée de mouler des objets à partir du matériau thermodurci. En particulier, elle permet de mouler des objets à partir du matériau à base de résine thermodurcie ayant atteint ou dépassé le point de gel.

Un autre avantage de l'invention est de permettre de fabriquer des matériaux en résine thermodurcie, à partir des matières premières liquides, sous forme de pièces ou unités élémentaires à base de résine thermodurcie ayant atteint ou dépassé le point de gel : particules, granulés, billes, bâtonnets, plaques, feuilles, films, rubans, tiges, tubes etc...par tout procédé connu de l'homme du métier. Ces pièces élémentaires sont ensuite transformables sous l'action conjointe de la chaleur et d'une contrainte mécanique en des objets de la forme souhaitée : par exemple, des rubans peuvent par estampage être découpés en pièces plus petites de forme choisie, des feuilles peuvent être superposées et assemblées par compression. Ces pièces élémentaires à base de matériau thermodurci, notamment à base de résine époxy, sont plus facilement stockables, transportables et manipulables que les formulations liquides dont elles sont issues. En effet, l'étape de transformation des pièces selon l'invention peut être réalisée par l'utilisateur final sans équipement de chimie (pas de toxicité, ni de date de péremption, ni de COV, pas de pesée de réactifs).

L'invention a donc pour objet un procédé de fabrication d'au moins un objet à base de résine thermodurcissable, qui est un cas particulier du procédé de transformation déjà décrit, ce procédé comprenant :

a) l'utilisation comme matière première d'un matériau ou objet de l'invention sous forme d'une unité élémentaire ou d'un ensemble d'unités élémentaires,
b) l'application simultanée d'une contrainte mécanique et d'une élévation de température pour mettre en forme l'objet,
c) le refroidissement de l'objet résultant de l'étape b).

En particulier à l'étape a), le matériau ou objet de l'invention est avantageusement à base de résine thermodurcie ayant atteint ou dépassé le point de gel.

Un autre avantage de ce procédé est de permettre le recyclage du matériau après utilisation, des objets pouvant être reconditionnés sous forme d'unités ou pièces élémentaires puis à nouveau remises en forme suivant l'invention.

L'invention a donc pour objet un procédé de recyclage d'un objet en matériau de l'invention, ce procédé comprenant :

a) l'utilisation de l'objet comme matière première,
b) l'application d'une contrainte mécanique, et éventuellement d'une élévation de température simultanée, pour transformer cet objet en un ensemble d'unités élémentaires,
c) le refroidissement de cet ensemble d'unités élémentaires.

En particulier à l'étape a), l'objet est avantageusement à base de résine thermodurcie ayant atteint ou dépassé le point de gel.

Par unités élémentaires, on entend des pièces qui ont une forme et/ou un aspect standardisé qui sont adaptés à leur transformation ultérieure en objet, comme par exemple : particules, granulés, billes, bâtonnets, plaques, feuilles, films, rubans, tiges, tubes etc.... Par ensemble d'unités élémentaires, on entend au moins deux unités élémentaire, mieux au moins trois, encore mieux au moins 5, préférentiellement au moins 10, encore plus préférentiellement au moins 100, avantageusement au moins $10^3$, encore plus avantageusement au moins $10^4$, de façon préférentielle au moins $10^5$.

Les matériaux et les procédés de l'invention permettent de remédier aux inconvénients des matériaux de l'art antérieur, qui sont la non transformabilité et la non recyclabilité des objets à base de résine époxy, en particulier lorsque ces résines ont atteint ou dépassé leur point de gel. Ils permettent notamment de transformer et de recycler autant de fois que souhaité l'objet à base de résine époxy. Le procédé permet aussi de fabriquer des résines époxy sous une forme solide, facile à stocker, à transporter et à manipuler, ces nouvelles formes de résine époxy, nommées unités élémentaires, étant utilisables directement pour la fabrication d'objets par application d'une étape de transformation classiquement utilisée pour les thermoplastiques. Enfin, ces résines et ces matériaux permettent de nouvelles applications des résines thermodurcissables par l'application de méthodes de transformation nouvelles pour ces résines et par

la possibilité de programmer des transformations contrôlées de ces matériaux.

Les domaines d'application de ces matériaux sont tous ceux des résines thermodurcissables : les matériaux et composites pour l'automobile, pour la construction aéronautique, l'électronique, le sport, le bâtiment, l'imprimerie, l'emballage.

Les compositions objet de l'invention sont avantageusement destinées à être appliquées sur un support métallique, sous forme d'un vernis, d'une peinture, d'une couche de protection anti-corrosion, une couche de protection d'un circuit électronique. Elle peut aussi être utilisée comme joint d'étanchéité, couche de colle ou d'adhésif.

**Figures :**

Figure 1 : représentation schématique des réactions de trans-estérification au sein du réseau de polymère
Figure 2 : Chromatogramme des produits contenus dans le milieu réactionnel issu de l'essai de transestérification
Figure 3 : Représentation graphique de la cinétique de transesterification dans l'essai de transestérification
Figure 4 : Données de relaxation de contrainte pour les réseaux époxy-acide, catalysés par $Zn(Ac)_2$ (5% mol).

**Partie expérimentale :**

1- Exemples de Synthèse :

I-1 Exemple 1 - Synthèse avec catalyseur, matériau (1) selon l'invention :

Première étape : Solubilisation du catalyseur et échange de ligands

Dans un ballon de 100 mL, on introduit 20 g de Pripol® 1040 [masse molaire par COOH 296 g/mol, taux de dimère (23%), trimère (77%)] et 742 mg d'acétate de zinc dihydrate (3,47 mmol), soit un rapport molaire [Zn]/[COOH] de 0,05. Le mélange est chauffé sous vide par paliers de 110°C à 170°C pendant 3 heures jusqu'à complète solubilisation des grains de catalyseur. Un fort dégagement gazeux est observé, ce qui confirme le départ des ligands acétate, remplacés par les acides gras.

Seconde étape : Réaction avec la résine époxy

Dans un bêcher en téflon, on ajoute 15,75 g du mélange préparé dans la première étape avec 9,25 g de DGEBA [masse molaire par époxy 174 g/mol] (pour un rapport [COOH]/[époxy] proche de 1). Le mélange réactionnel est homogénéisé en chauffant (~130°C) sous agitation mécanique. Le mélange est ensuite versé dans un moule constitué d'une plaque de laiton d'épaisseur 1,4 mm percée d'un trou rectangulaire, placé entre deux feuilles de papier antiadhésif, puis pressé sous une pression de 10 MPa à 130°C pendant 4h. Une analyse en spectroscopie IR montre la disparition de la bande $U_{C=0}$ de l'acide à 1705 $cm^{-1}$ ainsi que $\delta_{C\text{-}O\text{-}C}$ (ring vibration) de l'époxy à 915 $cm^{-1}$ et l'apparition de la bande $U_{C=0}$ de l'ester à 1735 $cm^{-1}$.

I-2- Exemple comparatif 1 : synthèse sans catalyseur

On utilise le même protocole qu'au §I-1. Dans un bécher en téflon, on place 15,75 g de Pripol® 1040 et 9,25 g de DGEBA (proportions stoechiométriques acide/époxy). Le mélange réactionnel est homogénéisé en chauffant (~130°C) sous agitation mécanique. Le mélange est ensuite placé dans un moule, sous presse (pression de 10 MPa) à 130°C pendant 24h. La réaction est poursuivie en plaçant la plaque découpée du moule en étuve sous vide à 130°C pendant 24 heures supplémentaires. Les analyses spectroscopiques IR montrent comme précédemment que la réaction est terminée.

II- Exemple 2 : Réparation sous presse

Des échantillons des plaques préparées suivant l'exemple I-1 et I-2 sont découpés en fragments de taille de 2 mm à 5 mm.

Ces fragments sont placés dans un moule en laiton d'épaisseur 1,35 mm percé d'une ouverture circulaire, entre deux feuilles de papier antiadhésif. L'ensemble est ensuite placé sous presse à 150°C, pendant 1 h30, sous une pression de 5 MPa.

Dans le cas catalysé (I-1), on observe une plaque circulaire de matériau réparé, les fragments étant solidement

reliés entre eux et les joints étant lissés et peu visibles. Dans le cas non catalysé (I-2), la plaque n'a que très peu de cohésion, les fragments n'étant pas liés entre eux.

III- Exemple 3 : Expériences en cisaillement

Dans une plaque de matériau synthétisé suivant l'exemple I-1 ou I-2, on découpe à l'emporte-pièce des bandes rectangulaires de largeur 5 mm, de longueur 25 mm et d'épaisseur 1,35 mm. Deux bandes sont placées l'une sur l'autre, se superposant sur une longueur de 15 mm conformément à la figure 7 de la norme ASTM D3983. L'ensemble est comprimé d'une épaisseur 2,70 mm à une épaisseur de 2 mm (soit une compression de 26 %) à l'aide d'une pince de Mohr et de cales de 2 mm.

Les bandes ainsi comprimées sont placées à l'étuve pendant 1 heure à une température de 150°C. Après refroidissement, la pince de Mohr est démontée et un test de traction est effectué à température ambiante à vitesse de déplacement constante (5 mm/min) sur une machine INSTRON®. On enregistre la force en fonction du déplacement qui atteint son maximum juste avant la rupture de l'assemblage.

Dans le cas de l'échantillon préparé sans catalyseur (I-2), la force maximale est de 11,8 N alors qu'elle est de 26,8 N dans le cas de l'échantillon préparé avec catalyseur (I-1).

IV- Exemple 4 : Répétabilité de la réparation

Deux bandes rectangulaires de largeur 5 mm, de longueur 25 mm et d'épaisseur 1,35 mm sont découpées dans le matériau de l'exemple I-1. Les deux bandes sont placées l'une sur l'autre, se superposant sur une longueur de 15 mm comme précédemment, et comprimées à température ambiante dans une pince de Mohr à 2 mm. Au bout d'une heure, l'échantillon est retiré de la pince de Mohr et placé à l'étuve à 150°C pendant 1 heure (échantillon 4.a). Une expérience de contrôle est effectuée sans chauffer l'échantillon mais en le laissant au repos 1 heure après compression (échantillon 4.b)

Un test de traction est effectué dans les mêmes conditions que dans l'exemple 3. Pour l'échantillon 4.b, la force maximale obtenue est de 6,4 N. Pour l'échantillon 4.a, après la rupture, les deux bandes sont réassemblées l'une sur l'autre (les mêmes faces étant toujours remises en vis-à-vis), comprimées à température ambiante puis placées à l'étuve une heure à 150°C. Ce processus de collage/décollage a été reproduit 4 fois. On obtient pour les 4 expériences consécutives les valeurs de force maximale suivantes : 17,3 ; 18,7 ; 16,3 et 17,2 N, soit une moyenne de 17,4 $\pm$ 1 N.

V- Exemple 5 : Expériences d'injection :

Le matériau (1) décrit dans l'exemple I-1 contient un catalyseur spécifique de transestérification. Les fonctions esters, formées par la réaction entre les acides et les fonctions époxy, sont capables de s'échanger avec les fonctions hydroxyle par des réactions de transestérification à une température adéquate. Les réseaux ainsi obtenus sont dynamiques par échange des liaisons. Sous haute température, le caractère dynamique permet de faire « couler » un réseau réticulé et de relaxer les contraintes lors du moulage. Cette dernière caractéristique est très utile dans le cas de réseaux époxy-acide pour éviter le phénomène de retrait, constamment observé en raison des nombreuses contraintes non relaxées.

L'injection est réalisée à partir des matériaux totalement réticulés avec une injecteuse DSM Xplore 12 dans un moule d'éprouvette en forme d'haltère selon la norme ISO 527-3.

V-1 Matériau 1 :

a) Premier essai :

Le matériau (1) est découpé en plusieurs morceaux de 2-3 mm de côté, puis chargé dans le barillet porté à une température de 250°C. Après quelques secondes de mise à température, le matériau est injecté dans un moule laissé à température ambiante à l'aide d'une pression de 16 bars pour un cycle total de 30s. L'éprouvette injectée est extraite du moule immédiatement : en quelques minutes, un retrait très important est observé (longueur de l'éprouvette : 4,8cm contre 7,2cm pour une éprouvette découpée à l'emporte-pièce, soit un retrait de 33%).

Ce premier test montre que les contraintes n'ont pas eu le temps de relaxer. Cela pourrait provenir du fait que le matériau a refroidi trop rapidement au contact du moule et a figé les contraintes. Les tests suivants seront réalisés avec un moule chauffé à 200°C (limite de l'appareil).

b) Deuxième essai :

La même expérience est réalisée avec le moule porté à une température de 200°C. La température de l'injection est 250°C. La pression utilisée est identique (16 bars). Après un recuit de 10 min à 200°C, le moule est laissé revenir à température ambiante en 6h environ.

Il n'y a aucun retrait observé.

Le cycle injection/démoulage a duré environ 6 heures, ce qui est peu compatible avec une industrialisation du procédé. Afin de pallier à ce problème, un système de refroidissement par eau du moule est installé, ce qui permet un passage de 200°C à 20°C en environ 5 minutes.

c) Troisième essai :

Les conditions de l'essai sont identiques à celles de l'essai précédent. Après le recuit de 10 min à 200°C, le moule est refroidi en 5 min par le circuit de refroidissement à eau. L'éprouvette obtenue ne présente ici aucun défaut ni aucun retrait.

V-2 Matériau comparatif 1 non catalysé :

Pour comparaison, une injection dans des conditions identiques au troisième essai précédent est effectuée avec un matériau époxy/acide non catalysé (voir §I-2 pour la synthèse). On obtient alors une éprouvette cassée en plusieurs morceaux, avec de nombreuses parties blanches (poudre agglomérée) : l'injection n'est pas réalisable pour ce matériau.

V-3-Conclusion :

L'ajout d'un catalyseur adéquat dans la synthèse des matériaux époxy/acide permet donc de réaliser des injections de thermodurs sans retrait après l'étape de démoulage. Cela est permis par des relaxations de contrainte dans le réseau, directement liées à des échanges des liaisons esters (points de réticulation) par des réactions de transestérification. Le catalyseur utilisé (acétate de zinc) permet une relaxation des contraintes dans les échelles de temps compatibles avec l'injection pour des températures proches de 250°C, ce qui rend nécessaire la présence de cycles de chauffage/refroidissement dans le procédé. Dans le cas des premiers tests, ce cycle d'injection/refroidissement a pu être réduit à environ 15min (avec un recuit permettant d'être sûr que toutes les contraintes étaient relaxées).

Enfin, cette étape de chauffage peut être avantageusement utilisée pour terminer la réticulation chimique et ainsi diminuer la durée de préparation des matériaux.

VI- Exemple 6 : Expériences de relaxation :

Des expériences de relaxation de contraintes sur les matériaux décrits à l'exemple 1 §I-1 ont été réalisées sur un rhéomètre Anton Paar MCR 501. Des disques de 26 mm de diamètre sont découpés à l'emporte-pièce dans des plaques de matériaux d'épaisseur 1,4 mm. Après avoir équilibré l'échantillon à une température donnée, une déformation de 10% est appliquée à l'aide d'une géométrie plan-plan de 25 mm de diamètre. L'évolution du module de relaxation G(t) au cours du temps ainsi mesurée peut être modélisée par un modèle de relaxation exponentielle simple (équation 1), où Go est le module de plateau et $\tau$ est le temps de relaxation.

$$G(t)=G_0 e^{-t/\tau} \quad \text{(Eq. 1)}$$

Les courbes de relaxation de contrainte sont représentées Figure 4. Les paramètres $G_0$ et $\tau$ utilisés pour modéliser les données de chaque échantillon sont dans le tableau 2.

La figure en encart Figure 4 montre une dépendance de type Arrhenius des temps de relaxation à la température : $\tau = B \times \exp(-A/T)$. Le paramètre d'activation A est estimé à 10 K

Tableau 1 - Paramètres choisis pour modéliser les relaxations de contrainte pour les réseaux époxy-acide, catalysés par $Zn(Ac)_2$ à 5% molaire

| Temp [°C] | $G_0$ (kPa) | $\tau$ (h) |
|---|---|---|
| 100 | 152 | 61 |

(suite)

| Temp [°C] | $G_0$ (kPa) | τ (h) |
|---|---|---|
| 125 | 265 | 10 |
| 150 | 369 | 2.4 |
| 190 | 390 | 0.4 |

VII- Exemple 7 : Transformation d'un matériau selon l'invention par façonnage à chaud

On synthétise une plaque de matériau comme dans l'exemple 1 mais avec une quantité double (10% molaire par rapport aux fonctions époxy) de catalyseur. A l'aide d'un massicot, on découpe une bande de dimensions 100 mm × 8 mm × 1,4 mm. Cette bande est saisie à ses deux extrémités par deux pinces et une torsion correspondant à 1 tour est appliquée. Cette déformation est maintenue constante en fixant les deux pinces à l'aide de statifs. Afin d'observer la biréfringence de l'échantillon au cours de l'expérience, l'ensemble est placé entre deux polaroïds croisés et éclairé par derrière à l'aide d'un négatoscope, les images sont enregistrées à l'aide d'un appareil photographique numérique.

Le ruban est alors chauffé à l'aide d'un pistolet à air chaud de modèle Steinel HL 1910 E sur position 9 niveau 2 à une distance de 5 cm environ.

Résultats

A la déformation appliquée, la biréfringence mécanique fait apparaître des zones très colorées à proximité de l'axe de l'échantillon et près des bords de l'échantillon et deux lignes neutres (obscures et peu colorées) à peu près à mi-chemin entre entre l'axe de l'échantillon et les bords. Au bout de moins de 10 minutes, la biréfringence a totalement disparu. Lorsque l'échantillon est retiré des pinces, on constate que l'échantillon ne reprend pas sa forme initiale mais conserve une déformation hélicoïdale, identique à la déformation imposée.

## Revendications

**1.** Composition de résine thermodurcissable, cette composition résultant de la mise en contact :

- d'au moins un précurseur de résine thermodurcissable, ce précurseur de résine thermodurcissable comportant des fonctions hydroxyle et/ou des groupements époxy, et éventuellement des fonctions ester,
- avec au moins un durcisseur choisi parmi les acides carboxyliques comportant au moins deux fonctions acide carboxylique,
- en présence d'au moins un catalyseur de transestérification au sens donné dans la description, dont la quantité totale en mole est entre 5 et 25% de la quantité molaire totale d'hydroxyle et d'époxy contenus dans le précurseur de résine thermodurcissable,

la quantité de durcisseur étant choisie de telle sorte que la résine soit sous forme d'un réseau et :

$N_O$ désignant le nombre de moles de fonctions hydroxyle dans le précurseur,
$N_X$ désignant le nombre de moles de groupements époxy dans le précurseur,
$N_A$ désignant le nombre de moles de fonctions acides du durcisseur capables de former une liaison avec une fonction hydroxyle ou avec un groupement époxy du précurseur de polymère thermodurcissable :

$$N_A < N_O + 2N_x.$$

**2.** Composition selon la revendication 1, dans laquelle

$$N_A > N_x.$$

**3.** Composition selon la revendication 1 ou la revendication 2 dans laquelle le précurseur de résine thermodurcissable est un précurseur de résine époxy.

4. Composition selon l'une quelconque des revendications 1 à 3, dans laquelle le précurseur de résine thermodurcissable est choisi de telle sorte que :

<$n_X$> étant la moyenne en nombre du nombre de fonctions époxy par précurseur
<$n_O$> étant la moyenne en nombre du nombre de fonctions hydroxyle par précurseur

$$2 < 2\langle n_X \rangle + \langle n_O \rangle.$$

5. Composition de résine époxy réparable, contenant une première composition contenant de la résine époxy non réticulée, et une seconde composition contenant un agent de réticulation à base d'acide carboxylique et un catalyseur de réaction, la première et la seconde compositions étant à mélanger juste avant emploi, la quantité d'acide étant suffisante pour que toutes les fonctions époxy soient aptes à réagir avec les fonctions carboxyliques de l'acide.

6. Composition selon l'une quelconque des revendications 3 à 5, dans laquelle le précurseur de résine époxy est un diglycidyl éther de bisphénol A, une huile de soja éoxydée ou une résine Novolac.

7. Composition selon l'une quelconque des revendications 1 à 6 dans laquelle le durcisseur est choisi parmi les acides carboxyliques comprenant 2 à 40 atomes de carbone.

8. Composition selon l'une quelconque des revendications 1 à 7, dans laquelle le durcisseur est choisi parmi : les dimères et trimères d'acides gras et les polyoxoalkylènes comportant des acides carboxyliques aux extrémités.

9. Composition selon l'une quelconque des revendications 1 à 8, dans laquelle le durcisseur est employé en mélange avec d'autres types de durcisseurs notamment des durcisseurs de type amine et des durcisseurs de type anhydride d'acide.

10. Composition selon l'une quelconque des revendications 1 à 9, dans laquelle le catalyseur est choisi parmi les catalyseurs métalliques qui, lorsqu'ils sont solubilisés dans la composition de durcisseur, forment un sel du métal du catalyseur et de l'acide carboxylique employé comme durcisseur.

11. Composition selon l'une quelconque des revendications 1 à 10, dans laquelle le catalyseur est choisi parmi : les sels métalliques de zinc, d'étain, de magnésium, de cobalt, de calcium, de titane, et de zirconium.

12. Composition selon l'une quelconque des revendications 1 à 11, comprenant en outre un catalyseur d'estérification classique.

13. Composition de matériau composite thermodurcissable comprenant au moins une composition de résine thermodurcissable selon l'une quelconque des revendications 1 à 12 et au moins un composant choisi parmi : les polymères, les pigments, les colorants, les charges, les plastifiants, les fibres, les agents retardateurs de flamme, les agents anti oxydants, les lubrifiants, du bois, du verre, des métaux.

14. Kit pour la préparation d'une résine thermodurcissable selon l'une quelconque des revendications 1 à 12 ou d'un matériau composite comprenant une résine thermodurcissable selon l'une quelconque des revendications 1 à 13, ce kit comprenant au moins une première composition comprenant un précurseur de résine thermodurcissable, ce précurseur de résine thermodurcissable comportant des fonctions hydroxyle et/ou des groupements époxy, et éventuellement des fonctions ester, au moins une seconde composition comprenant un durcisseur choisi parmi les acides carboxyliques et au moins un catalyseur de transestérification, la première et la seconde composition étant dans un conditionnement adapté pour empêcher la réaction de réticulation entre le précurseur et le durcisseur de se produire sans intervention d'un opérateur.

15. Procédé de fabrication d'un objet à base d'une composition selon l'une quelconque des revendications 1 à 12, ce procédé comprenant :

a) la mise en contact d'une première composition comprenant au moins un précurseur de résine thermodurcissable, avec une seconde composition comprenant au moins un durcisseur choisi parmi les acides carboxyliques, en présence d'au moins un catalyseur de transestérification,

b) la mise en forme de la composition issue de l'étape a)
c) l'application d'une énergie permettant le durcissement de la résine
d) le refroidissement de la résine durcie.

**16.** Procédé selon la revendication 15, dans lequel dans une première étape, on solubilise le catalyseur dans la composition de durcisseur, de préférence par chauffage et agitation.

**17.** Objet à base de résine thermodurcissable susceptible d'être obtenu par le procédé selon la revendication 15 ou 16.

**18.** Objet selon la revendication 17 résultant du durcissement de la résine thermodurcissable selon l'une quelconque des revendications 1 à 12, qui se **caractérise par** un module de conservation compris entre $1\times10^5$ et $5\times10^6$ Pa au-dessus de la température de transition vitreuse Tg de la résine, tel que mesuré par une mesure dynamique mécanique à 1 Hz.

**19.** Objet selon la revendication 17 résultant du durcissement de la résine thermodurcissable selon l'une quelconque des revendications 1 à 12, qui présente une viscosité comprise entre $10^5$ et $5\times10^9$ Pa.s à des températures comprises entre 150 et 300°C, telle que mesurée en utilisant une déformation de 10% pour la relaxation de contrainte.

**20.** Objet selon la revendication 17, étant un matériau époxy ; en particulier un matériau composite, une mousse, un film, un empilement de films ou de feuilles.

**21.** Objet selon l'une quelconque des revendications 17 à 20, dans lequel ladite résine a atteint ou dépassé le point de gel.

**22.** Procédé de transformation d'au moins un objet selon l'une des revendications 17 à 21, ce procédé comprenant : l'application à l'objet d'une contrainte mécanique à une température (T) supérieure à la température ambiante, de préférence supérieure à la température de transition vitreuse Tg du matériau composant l'objet.

**23.** Procédé selon la revendication précédente, mettant en outre en oeuvre un mélange ou une agglomération de plusieurs composés additionnels choisis parmi : un ou plusieurs polymères, des pigments, des colorants, des charges, des plastifiants, des fibres, des agents retardateurs de flamme, des agents antioxydants, des lubrifiants, du bois, du verre, des métaux.

**24.** Procédé selon l'une quelconque des revendications 22 et 23, étant un procédé d'assemblage, de collage ou de réparation dudit au moins un objet.

**25.** Procédé de recyclage d'un objet selon l'une quelconque des revendications 17 à 21, ce procédé comprenant :

a) une réduction de l'objet en particules par application d'un broyage mécanique,
b) la mise en oeuvre des particules de l'étape a) dans un procédé de transformation selon l'une quelconque des revendications 22 à 24.

**26.** Procédé de recyclage d'un objet selon l'une des revendications 17 à 21, ce procédé comprenant :

a) l'utilisation de l'objet comme matière première,
b) l'application d'une contrainte mécanique, et éventuellement d'une élévation de température simultanée, pour transformer cet objet en un ensemble d'unités élémentaires,
c) le refroidissement de l'ensemble d'unités élémentaires.

**27.** Procédé d'obtention et/ou de réparation d'un objet à base de résine époxy comprenant :

- au moins une étape (a) de réaction des fonctions époxy de ladite résine avec au moins un acide carboxylique pour former un objet,
- une étape (b) de mise en contact d'au moins deux objets tels qu'obtenus à l'étape (a), et
- une étape (c) d'application d'une température (T) supérieure à la température ambiante afin d'obtenir un seul objet.

**28.** Objet susceptible d'être obtenu par un procédé selon l'une quelconque des revendications 22 à 27.

**29.** Utilisation d'une composition selon l'une des revendications 1 à 13 ou d'un objet selon l'une des revendications 17 à 21 comme matériaux et composites pour l'automobile, pour la construction aéronautique, l'électronique, le sport, le bâtiment, l'imprimerie, l'emballage ; comme colle, adhésif, revêtement ou joint d'étanchéité.

## Patentansprüche

**1.** Wärmehärtende Harzzusammensetzung, wobei die Zusammensetzung erhalten wird, indem man Folgendes miteinander in Kontakt bringt:

- mindestens eine Vorstufe eines wärmehärtenden Harzes, wobei die Vorstufe des wärmehärtenden Harzes Hydroxylfunktionen und/oder Epoxygruppen und gegebenenfalls Esterfunktionen trägt,
- mit mindestens einem Härtungsmittel, das aus Carbonsäuren mit mindestens zwei Carbonsäurefunktionen ausgewählt wird,
- in Gegenwart mindestens eines Umesterungskatalysators in dem in der Beschreibung angegebenen Sinne, dessen Gesamtmenge in mol zwischen 5 und 25% der gesamten Menge an Molen von Hyroxyl und Epoxy, die in der Vorstufe des wärmehärtenden Harzes enthalten sind, beträgt,

wobei die Menge an Härtungsmittel derart ausgewählt wird, dass das Harz die Form eines Netzes hat, und:

No die Anzahl der Mole an Hydroxylfunktionen in der Vorstufe angibt,
$N_x$ die Anzahl der Mole an Epoxygruppen in der Vorstufe angibt,
$N_A$ die Anzahl der Mole an Säurefunktionen des Härtungsmittels angibt, die eine Verbindung mit einer Hydroxylfunktion oder mit einer Epoxygruppe der Vorstufe des wärmehärtenden Polymers eingehen können:

$$N_A < N_O + 2N_x.$$

**2.** Zusammensetzung nach Anspruch 1, wobei

$$N_A > N_x.$$

**3.** Zusammensetzung nach Anspruch 1 oder Anspruch 2, wobei die Vorstufe des wärmehärtenden Harzes eine Epoxyharzvorstufe ist.

**4.** Zusammensetzung nach einem der Ansprüche 1 bis 3, wobei die Vorstufe des wärmehärtenden Harzes derart ausgewählt wird, dass:

wobei $<n_x>$ das Zahlenmittel der Anzahl an Epoxyfunktionen pro Vorstufe ist,
$<n_o>$ das Zahlenmittel der Anzahl an Hydroxylfunktionen pro Vorstufe ist,

$$2 < 2<n_x>+<n_O>.$$

**5.** Reparierbare Epoxyharzzusammensetzung, enthaltend eine erste Zusammensetzung, die das nicht-vernetzte Epoxyharz enthält, und eine zweite Zusammensetzung, die ein Vernetzungsmittel auf der Basis von Carbonsäure und einen Reaktionskatalysator enthält, wobei die erste und die zweite Zusammensetzung kurz vor der Verwendung zu mischen sind, wobei die Menge an Säure ausreichend ist, dass alle Epoxyfunktionen mit den Carboxylfunktionen der Säure reagieren können.

**6.** Zusammensetzung nach einem der Ansprüche 3 bis 5, wobei die Epoxyharzvorstufe ein Bisphenol-A-digycidylether, ein epoxidiertes Sojaöl oder ein Novolakharz ist.

**7.** Zusammensetzung nach einem der Ansprüche 1 bis 6, wobei das Härtungsmittel aus Carbonsäuren, die 2 bis 40 Kohlenstoffatome umfassen, ausgewählt wird.

**8.** Zusammensetzung nach einem der Ansprüche 1 bis 7, wobei das Härtungsmittel aus den Folgenden ausgewählt wird: Dimeren und Trimeren von Fettsäuren und Polyoxyalkylenen, die an den Enden Carbonsäuren tragen.

**9.** Zusammensetzung nach einem der Ansprüche 1 bis 8, wobei das Härtungsmittel im Gemisch mit anderen Typen von Härtungsmitteln, insbesondere Härtungsmitteln des Amintyps und Härtungsmitteln des Säureanhydridtyps, eingesetzt wird.

**10.** Zusammensetzung nach einem der Ansprüche 1 bis 9, wobei der Katalysator aus Metallkatalysatoren ausgewählt wird, die, wenn sie in der Härtungsmittelzusammensetzung solubilisiert sind, ein Salz des Metalls des Katalysators und der als Härtungsmittel eingesetzten Carbonsäure bilden.

**11.** Zusammensetzung nach einem der Ansprüche 1 bis 10, wobei der Katalysator aus den Folgenden ausgewählt wird: Zink-, Zinn-, Magnesium-, Kobalt-, Calcium-, Titan- und Zirkonmetallsalzen.

**12.** Zusammensetzung nach einem der Ansprüche 1 bis 11, der außerdem einen herkömmlichen Veresterungskatalysator umfasst.

**13.** Wärmehärtende Verbundwerkstoffzusammensetzung, die mindestens eine wärmehärtende Harzzusammensetzung nach einem der Ansprüche 1 bis 12 und mindestens einen aus: Polymeren, Pigmenten, Farbstoffen, Füllstoffen, Weichmachern, Fasern, Flammschutzmitteln, Antioxidationsmitteln, Schmierstoffen, Holz, Glas, Metallen ausgewählten Bestandteil umfasst.

**14.** Satz zur Herstellung eines wärmehärtenden Harzes nach einem der Ansprüche 1 bis 12 oder eines Verbundwerkstoffs, der ein wärmehärtendes Harz nach einem der Ansprüche 1 bis 13 umfasst, wobei der Satz Folgendes umfasst: mindestens eine erste Zusammensetzung, die eine Vorstufe eines wärmehärtenden Harzes umfasst, wobei diese Vorstufe eines wärmehärtenden Harzes Hydroxylfunktionen und/oder Epoxygruppen und gegebenenfalls Esterfunktionen trägt, mindestens eine zweite Zusammensetzung, die ein Härtungsmittel, das aus Carbonsäuren ausgewählt wird, und mindestens einen Umesterungskatalysator umfasst, wobei die erste und die zweite Zusammensetzung sich in einer Verpackung befinden, die dafür ausgelegt ist zu verhindern, dass die Vernetzungsreaktion zwischen der Vorstufe und dem Härtungsmittel ohne Eingriff eines Benutzers abläuft.

**15.** Verfahren zur Herstellung eines Gegenstands auf der Basis einer Zusammensetzung nach einem der Ansprüche 1 bis 12, wobei das Verfahren Folgendes umfasst:

a) das Inkontaktbringen einer ersten Zusammensetzung, die mindestens eine Vorstufe eines wärmehärtenden Harzes umfasst, mit einer zweiten Zusammensetzung, die mindestens ein Härtungsmittel umfasst, das aus Carbonsäuren ausgewählt ist, in Gegenwart mindestens eines Umesterungskatalysators,
b) das Formen der nach Schritt a) erhaltenen Zusammensetzung
c) das Anwenden einer Energie, welche das Härten des Harzes gestattet
d) das Abkühlen des gehärteten Harzes.

**16.** Verfahren nach Anspruch 15, wobei man in einem ersten Schritt den Katalysator in der Härtungsmittelzusammensetzung, vorzugsweise durch Erwärmen und Rühren, solubilisiert.

**17.** Gegenstand auf der Basis von wärmehärtendem Harz, der durch das Verfahren nach Anspruch 15 oder 16 erhalten werden kann.

**18.** Gegenstand nach Anspruch 17, der sich durch die Härtung des wärmehärtenden Harzes nach einem der Ansprüche 1 bis 12 ergibt, der durch ein Speichermodul zwischen $1x10^5$ und $5x10^6$ Pa oberhalb der Glasübergangstemperatur Tg des Harzes gekennzeichnet ist, wie durch eine dynamisch-mechanische Messung bei 1 Hz gemessen wird.

**19.** Gegenstand nach Anspruch 17, der sich durch die Härtung des wärmehärtenden Harzes nach einem der Ansprüche 1 bis 12 ergibt, der eine Viskosität zwischen $10^5$ und $5x\ 10^9$ Pa.s bei Temperaturen zwischen 150 und 300°C aufweist, wie unter Verwendung einer Verformung von 10% für die Spannungsrelaxation gemessen wird.

**20.** Gegenstand nach Anspruch 17, bei dem es sich um ein Epoxymaterial, insbesondere einen Verbundwerkstoff, einen Schaum, einen Film, einen Stapel von Filmen oder Bögen handelt.

**21.** Gegenstand nach einem der Ansprüche 17 bis 20, wobei das Harz den Gelierpunkt erreicht oder überschritten hat.

**22.** Verfahren zur Umformung mindestens eines Gegenstands nach einem der Ansprüche 17 bis 21, wobei das Verfahren Folgendes umfasst: Anwenden einer mechanisches Spannung auf den Gegenstand bei einer Temperatur (T), die höher ist als Umgebungstemperatur, vorzugsweise höher als die Glasübergangstemperatur Tg des Materials, das den Gegenstand ausmacht.

**23.** Verfahren nach dem vorhergehenden Anspruch, das außerdem ein Gemisch oder ein Agglomerat von mehreren zusätzlichen Verbindungen einsetzt, die aus den Folgenden ausgewählt sind: einem oder mehreren Polymeren, Pigmenten, Farbstoffen, Füllstoffen, Weichmachern, Fasern, Flammschutzmitteln, Antioxidationsmitteln, Schmierstoffen, Holz, Glas, Metallen.

**24.** Verfahren nach einem der Ansprüche 22 und 23, bei dem es sich um ein Zusammenbau-, Klebe- oder Reparaturverfahren mindestens eines Gegenstands handelt.

**25.** Recyclingverfahren für einen Gegenstand nach einem der Ansprüche 17 bis 21, wobei das Verfahren Folgendes umfasst:

a) eine Zerkleinerung des Gegenstands in Teilchen durch Anwenden von mechanischer Zerkleinerung,
b) Einsetzen der Teilchen aus Schritt a) bei einem Umformungsverfahren nach einem der Ansprüche 22 bis 24.

**26.** Recyclingverfahren für einen Gegenstand nach einem der Ansprüche 17 bis 21, wobei das Verfahren Folgendes umfasst:

a) Verwendung des Gegenstands als Rohstoff,
b) Anwendung einer mechanischen Beanspruchung und gegebenenfalls einer gleichzeitigen Temperaturerhöhung, um den Gegenstand in eine Ansammlung von kleinsten Einheiten umzuwandeln,
c) Abkühlen der Ansammlung von kleinsten Einheiten.

**27.** Verfahren zur Gewinnung und/oder Reparatur eines Gegenstands auf der Basis von Epoxyharz, umfassend:

- mindestens Schritt (a) der Umsetzung der Epoxyfunktionen des Harzes mit mindestens einer Carbonsäure, um einen Gegenstand herzustellen,
- einen Schritt (b), in dem mindestens zwei Gegenstände, wie sie in Schritt (a) erhalten werden, in Kontakt gebracht werden, und
- einen Schritt (c), in dem man eine Temperatur (T) anwendet, die höher ist als Umgebungstemperatur, um einen einzelnen Gegenstand zu erhalten.

**28.** Gegenstand, der durch ein Verfahren nach einem der Ansprüche 22 bis 27 erhalten werden kann.

**29.** Verwendung einer Zusammensetzung nach einem der Ansprüche 1 bis 13 oder eines Gegenstands nach einem der Ansprüche 17 bis 21 als Materialien und Verbundwerkstoffe für Automobile, für den Flugzeugbau, für die Elektronik, den Sport, das Bauwesen, das Drucken, Verpackungen; als Kleber, Haftmittel, Beschichtung oder Dichtung.

## Claims

**1.** Thermosetting resin composition, this composition resulting from placing in contact:

at least one thermosetting resin precursor, this thermosetting resin precursor comprising hydroxyl functions and/or epoxy groups, and optionally ester functions,
with at least one hardener chosen from carboxylic acids comprising at least two carboxylic acid functions,
in the presence of at least one transesterification catalyst within the meaning given in the description,
whose total molar amount is between 5% and 25% of the total molar amount of hydroxyl and epoxy contained in the thermosetting resin precursor,
the amount of hardener being chosen such that the resin is in the form of a network, and:

No denoting the number of moles of hydroxyl functions in the precursor,

$N_x$ denoting the number of moles of epoxy group in the precursor,
$N_A$ denoting the number of moles of acid functions of the hardener that are capable of forming a bond with a hydroxyl function or with an epoxy group of the thermosetting polymer precursor:

$$N_A < N_O + 2N_x.$$

**2.** Composition according to Claim 1, in which

$$N_A > N_x.$$

**3.** Composition according to Claim 1 or Claim 2, in which the thermosetting resin precursor is an epoxy resin precursor.

**4.** Composition according to any one of Claims 1 to 3, in which the thermosetting resin precursor is chosen such that:

<nX> being the numerical average of the number of epoxy functions per precursor
<no> being the numerical average of the number of hydroxyl functions per precursor

$$2 < 2\langle n_X \rangle + \langle n_O \rangle.$$

**5.** Repairable epoxy resin composition, containing a first composition containing non-crosslinked epoxy resin, and a second composition containing a crosslinking agent based on carboxylic acid and a reaction catalyst, the first and the second compositions being intended to be mixed together just before use, the amount of acid being sufficient for all the epoxy functions to be capable of reacting with the carboxylic functions of the acid.

**6.** Composition according to any one of Claims 3 to 5, in which the epoxy resin precursor is a bisphenol A diglycidyl ether, epoxidized soybean oil or a novolac resin.

**7.** Composition according to any one of Claims 1 to 6, in which the hardener is chosen from carboxylic acids comprising 2 to 40 carbon atoms.

**8.** Composition according to any one of Claims 1 to 7, in which the hardener is chosen from: fatty acid dimers and trimers, and polyoxoalkylenes comprising carboxylic acids at the ends.

**9.** Composition according to any one of Claims 1 to 8, in which the hardener is used as a mixture with other types of hardeners, especially hardeners of amine type and hardeners of acid anhydride type.

**10.** Composition according to any one of Claims 1 to 9, in which the catalyst is chosen from metal catalysts which, when dissolved in the hardener composition, form a metal salt of the catalyst and of the carboxylic acid used as hardener.

**11.** Composition according to any one of Claims 1 to 10, in which the catalyst is chosen from: metal salts of zinc, tin, magnesium, cobalt, calcium, titanium and zirconium.

**12.** Composition according to any one of Claims 1 to 11, also comprising a standard esterification catalyst.

**13.** Thermosetting composite material composition comprising at least one thermosetting resin composition according to any one of Claims 1 to 12 and at least one component chosen from: polymers, pigments, dyes, fillers, plasticizers, fibres, flame retardants, antioxidants, lubricants, wood, glass, metals.

**14.** Kit for preparing a thermosetting resin according to any one of Claims 1 to 12 or a composite material comprising a thermosetting resin according to any one of Claims 1 to 13, this kit comprising at least one first composition comprising a thermosetting resin precursor, this thermosetting resin precursor comprising hydroxyl functions and/or epoxy groups, and optionally ester functions, at least one second composition comprising a hardener chosen from carboxylic acids and at least one transesterification catalyst, the first and the second composition being in conditioning suitable for preventing the crosslinking reaction between the precursor and the hardener from taking place without

intervention of an operator.

**15.** Process for manufacturing an article based on a composition according to any one of Claims 1 to 12, this process comprising:

a) the placing in contact of a first composition comprising at least one thermosetting resin precursor with a second composition comprising at least one hardener chosen from carboxylic acids, in the presence of at least one transesterification catalyst,
b) the forming of the composition obtained from step a),
c) the application of energy for hardening the resin,
d) cooling of the hardened resin.

**16.** Process according to Claim 15, in which, in a first step, the catalyst is dissolved in the hardener composition, preferably by heating and stirring.

**17.** Article based on thermosetting resin that may be obtained via the process according to Claim 15 or 16.

**18.** Article according to Claim 17 resulting from hardening of the thermosetting resin according to any one of Claims 1 to 12, which is **characterized by** a storage modulus of between $1 \times 10^5$ and $5 \times 10^6$ Pa above the glass transition temperature Tg of the resin, as measured by dynamic mechanical measurement at 1 Hz.

**19.** Article according to Claim 17 resulting from the hardening of the thermosetting resin according to any one of Claims 1 to 12, which has a viscosity of between $10^5$ and $5 \times 10^9$ Pa.s at temperatures of between 150 and 300°C, as measured using a 10% deformation for the stress relaxation.

**20.** Object according to Claim 17, which is an epoxy material; in particular a composite material, a foam, a film, a stack of films or of sheets.

**21.** Object according to any one of Claims 17 to 20, in which said resin has reached or exceeded the gel point.

**22.** Process for transforming at least one article according to one of Claims 17 to 21, this process comprising: the application to the article of a mechanical constraint at a temperature (T) above room temperature, preferably above the glass transition temperature Tg of the material of which the article is composed.

**23.** Process according to the preceding claim, using a mixture or an agglomeration of several additional compounds chosen from: one or more polymers, pigments, colourants, fillers, plasticizers, fibers, flame retardants, antioxidants, lubricants, wood, glass, metals.

**24.** Process according to either of Claims 22 and 23, which is a process for assembling, bonding or repairing said at least one object.

**25.** Process for recycling an article according to any one of Claims 17 to 21, this process comprising:

a) reduction of the article into particles by application of mechanical grinding,
b) use of the particles from step a) in a transformation process according to any one of claims 22 to 24.

**26.** Process for recycling an article according to one of Claims 17 to 21, this process comprising:

a) the use of the article as starting material,
b) the application of a mechanical constraint, and optionally of a simultaneous increase in temperature, to transform this article into an assembly of elemental units,
c) cooling of the assembly of elemental units.

**27.** Process for obtaining and/or repairing an object based on epoxy resin, comprising:

- at least one step (a) of reacting the epoxy functions of said resin with at least one carboxylic acid to form an object,
- a step (b) of placing at least two objects as obtained in step (a) in contact, and
- a step (c) of applying a temperature (T) above room temperature so as to obtain a single object.

**28.** Object which may be obtained via a process according to any one of Claims 22 to 27.

**29.** Use of a composition according to one of Claims 1 to 13 or of an article according to one of Claims 17 to 21 as materials and composites for motor vehicles, for aeronautical construction, electronics, sport, construction, printing or packaging; as bonding agent, adhesive, coating or seal.

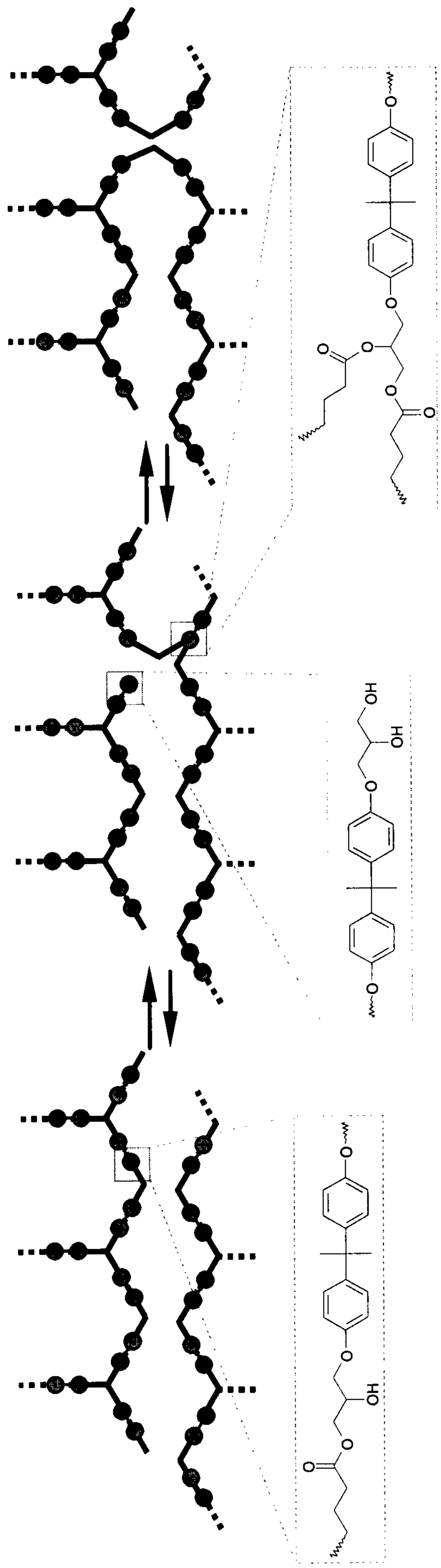

Figure 1

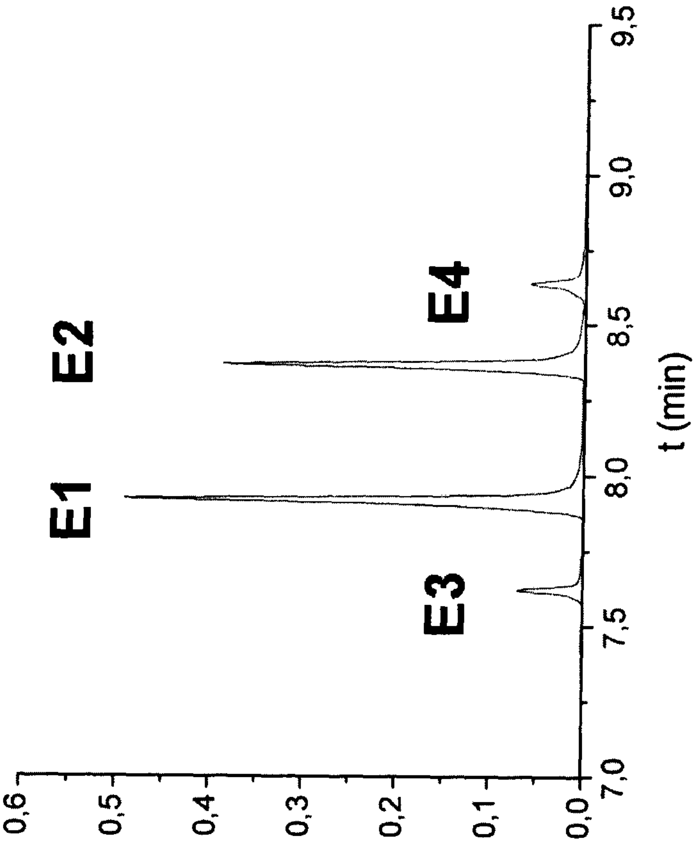


Figure 2

E3
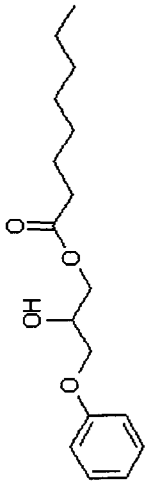

E1
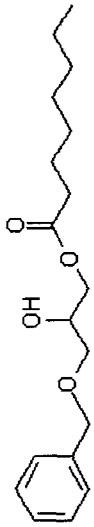

E2
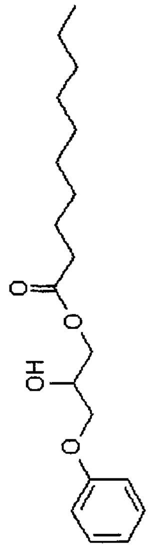

E4
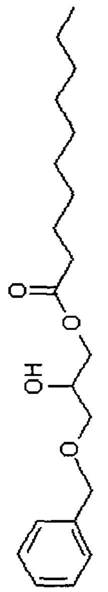

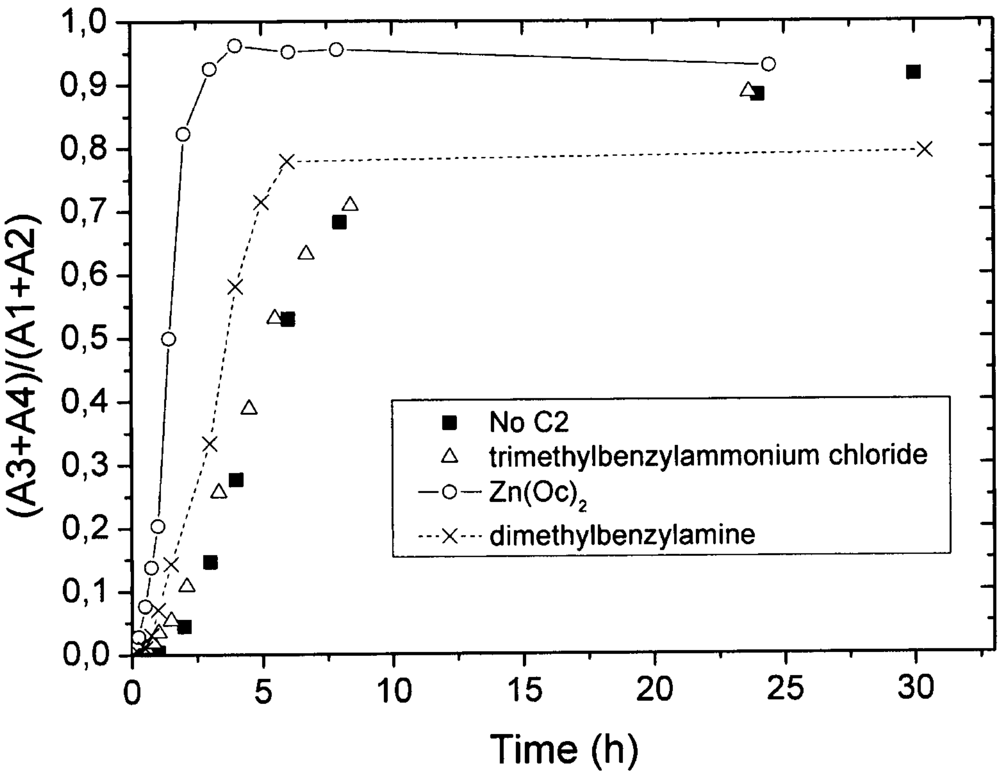
1,0
0,9
0,8
0,7
0,6
0,5
0,4
0,3
0,2
0,1
0,0
(A3+A4)/(A1+A2)
0
5
10
15
20
25
30
Time (h)
No C2
trimethylbenzylammonium chloride
Zn(Oc)2
dimethylbenzylamine

Figure 3

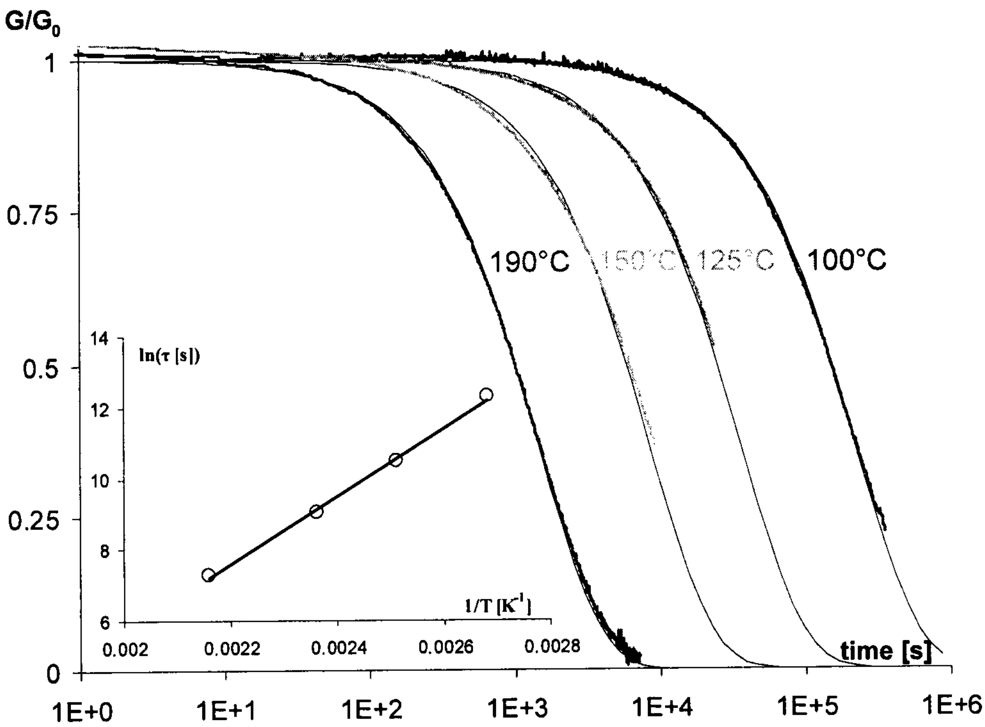
G/G0
1
0.75
0.5
0.25
0
190°C
150°C
125°C
100°C
14
12
10
8
6
ln(τ [s])
1/T [K-1]
0.002
0.0022
0.0024
0.0026
0.0028
time [s]
1E+0
1E+1
1E+2
1E+3
1E+4
1E+5
1E+6

Figure 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 02064653 A
- GB 1326773 A
- US 5470609 A


### Littérature non-brevet citée dans la description


- **AFLAL et al.** *Appt. Polym. Sci.,* 2009, vol. 113, 2191
- **LEHN, J.M.** *Progress Polym. Sci.,* 2005, vol. 30, 814-831
- **SKENE W.G. ; LEHN, J.M.** *P.N.A.S.,* 2004, vol. 22, 8270-8275
- **CHEN X. et al.** *Science,* 2002, vol. 295, 1698-1702
- **J.O.OUTWATER ; D.G. GERRY.** *J.Adhesion,* 1969, vol. 1, 290-298
- Epoxy Resins, Chemistry and Technology. Marcel Dekker, 1988
- **P.J. FLORY.** Principles of Polymer Chemistry. Cornell University Press, 1953
- Epoxy Polymer. Wiley-VCH, 2010
- **R. PERRIN ; J.P. SCHARFF.** Chimie industrielle. 1999